(19) **Europäisches Patentamt / European Patent Office / Office européen des brevets**

(11) **EP 4 350 050 A1**

(12) **EUROPEAN PATENT APPLICATION**
published in accordance with Art. 153(4) EPC

(43) Date of publication:
**10.04.2024  Bulletin 2024/15**

(21) Application number: **22811402.1**

(22) Date of filing: **27.05.2022**

(51) International Patent Classification (IPC):
**C25B 1/46** (2006.01)     **C02F 1/461** (2006.01)
**C25B 9/00** (2021.01)     **C25B 15/029** (2021.01)
**C25B 15/031** (2021.01)     **C25B 15/033** (2021.01)

(52) Cooperative Patent Classification (CPC):
**C25B 1/46; C02F 1/461; C25B 15/00; C25B 15/031**

(86) International application number:
**PCT/JP2022/021694**

(87) International publication number:
**WO 2022/250134 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2021  JP 2021089527**

(71) Applicant: **Asahi Kasei Kabushiki Kaisha Tokyo 1000006 (JP)**

(72) Inventor: **ANAMI, Yasutaka Tokyo 100-0006 (JP)**

(74) Representative: **Hoffmann Eitle Patent- und Rechtsanwälte PartmbB Arabellastraße 30 81925 München (DE)**

(54) **OPERATION SUPPORT DEVICE, OPERATION SUPPORT SYSTEM, OPERATION SUPPORT METHOD, AND OPERATION SUPPORT PROGRAM**

(57)     Provided is an operation support apparatus comprising: a production efficiency acquisition unit which acquires production efficiency of an electrolysis tank; a determination unit which determines whether the production efficiency of the electrolysis tank acquired by the production efficiency acquisition unit is below a predetermined production efficiency threshold value; and an identification unit which identifies, if it is determined by the determination unit that the production efficiency of the electrolysis tank is below the production efficiency threshold value, a first factor for which the production efficiency of the electrolysis tank has fallen below the production efficiency threshold value. The production efficiency of the electrolysis tank may be current efficiency of the electrolysis tank. The production efficiency acquisition unit may acquire the current efficiency of the electrolysis tank. The determination unit may determine whether the current efficiency of the electrolysis tank is below a predetermined current efficiency threshold value. If it is determined by the determination unit that the current efficiency of the electrolysis tank is below the current efficiency threshold value, the identification unit may identify, as the first factor, a factor for which the current efficiency of the electrolysis tank has fallen below the current efficiency threshold value.

FIG.5

**Description**

BACKGROUND

1. TECHNICAL FIELD

The present invention relates to an operation support apparatus, an operation support system, an operation support method, and an operation support program.

2. RELATED ART

Patent Document 1 describes that "a method for updating an ion exchange membrane according to the present embodiment includes sandwiching the ion exchange membrane between an anode side gasket and a cathode side gasket, ..." (Paragraph 0052).

PRIOR ART DOCUMENT

PATENT DOCUMENT

Patent Document 1: Japanese Patent Application Publication No. 2019-19408

TECHNICAL PROBLEM

For an electrolytic apparatus including an ion exchange membrane or the like, production efficiency of a product produced by the electrolytic apparatus easily decreases when performance of the ion exchange membrane or the like degrades. Accordingly, it is preferable to early recover the performance of the ion exchange membrane or the like. In order to early recover the performance of the ion exchange membrane or the like, it is preferable to early identify a factor for the degradation of the performance of the ion exchange membrane or the like and to early take countermeasures to recover the performance. In order to early identify the factor for the degradation of the performance of the ion exchange membrane or the like and to early take the countermeasures to recover the performance, it is preferable to monitor parameters such as current efficiency in the electrolytic apparatus.

SUMMARY

A first aspect of the present invention provides an operation support apparatus. The operation support apparatus includes: a production efficiency acquisition unit which acquires production efficiency of an electrolysis tank; a determination unit which determines whether the production efficiency of the electrolysis tank acquired by the production efficiency acquisition unit is below a predetermined production efficiency threshold value; and an identification unit which identifies, if it is determined by the determination unit that the production efficiency of the electrolysis tank is below the production efficiency threshold value, a first factor for which the production efficiency of the electrolysis tank has fallen below the production efficiency threshold value.
The production efficiency acquisition unit may acquire the production efficiency of the electrolysis tank in real time. The determination unit may determine in real time whether the production efficiency of the electrolysis tank is below the production efficiency threshold value. The identification unit may identify the first factor in real time.
The identification unit may identify a first impurity which is in the electrolysis tank and corresponds to the first factor, and identify a first countermeasure which corresponds to the first factor and is for suppressing a decrease in the production efficiency of the electrolysis tank and recovering the production efficiency.
The identification unit may identify the first factor, the first impurity, and the first countermeasure in real time.
The production efficiency may be current efficiency. The determination unit may determine whether the current efficiency is below a predetermined current efficiency threshold value.
The operation support apparatus may further include a voltage acquisition unit which acquires voltage to be supplied to the electrolysis tank. When determining that the current efficiency is equal to or greater than the current efficiency threshold value, the determination unit further may determine whether the voltage acquired by the voltage acquisition unit is above a predetermined voltage threshold value. If it is determined by the determination unit that the voltage is above the voltage threshold value, the identification unit may identify a second factor for which the voltage has gone above the voltage threshold value.
The determination unit may calculate an electric power consumption rate of the electrolysis tank based on at least one of the current efficiency or the voltage. The production efficiency may be the current efficiency, or the electric power consumption rate calculated by the determination unit.

If the production efficiency is the electric power consumption rate, the determination unit may determine whether the electric power consumption rate is equal to or greater than a predetermined electric power consumption rate threshold value. If it is determined by the determination unit that the electric power consumption rate of the electrolysis tank is equal to or greater than an electric power consumption rate threshold value, the identification unit may identify the first factor or the second factor.

The voltage acquisition unit may acquire in real time the voltage to be supplied to the electrolysis tank. The determination unit may determine in real time whether the voltage to be supplied to the electrolysis tank is above the voltage threshold value. The identification unit may identify the second factor in real time.

The identification unit may identify a second impurity which is in the electrolysis tank and corresponds to the second factor, and identify a second countermeasure which corresponds to the second factor and is for suppressing an increase in the voltage and recovering the voltage.

The identification unit may identify the second factor, the second impurity, and the second countermeasure in real time.

The operation support apparatus may support operation of an electrolytic apparatus. The electrolytic apparatus may be provided with a raw salt dissolution layer, a sedimentation and separation tank, a chemical agent charging unit, a filter, a reaction tank, a resin tower, a pure water charging unit, a chemical solution charging unit, an image sensor, and a detection unit.

The raw salt dissolution layer dissolves raw salt. The raw salt may be alkali metal chloride. The raw salt may include at least one of Ca (calcium), Sr (strontium), Ba (barium), or Mg (magnesium).

The chemical agent charging unit charges a chemical agent to the reaction tank. The chemical agent may include $Mg(OH)_2$ (magnesium hydroxide) or $CaCOs$ (calcium carbonate). In the reaction tank, the chemical agent may solidify a first impurity or a second impurity which may degrade ion exchange performance of an ion exchange membrane.

The sedimentation and separation tank may precipitate the first impurity or the second impurity solidified in the reaction tank.

The filter may remove at least part of the first impurity or the second impurity included in liquid.

The resin tower may be provided with an ion exchange resin, an impurity sensor, and a flow rate sensor. The ion exchange resin removes an ion of alkali earth metal. The impurity sensor detects at least one of the ion of alkali earth metal, an aluminum ion ($Al^{3+}$), a nickel ion ($Ni^{2+}$), iron ions ($Fe^{2+}$, $Fe^{3+}$), an iodine ion ($I^-$), silicon (Si), a sulfate ion ($SO_4^{2-}$), a suspended matter, or an organic matter. The suspended matter and the organic matter may be a suspended solid (SS) and a total organic carbon (TOC).

The pure water charging unit may charge pure water into the resin tower. The chemical solution charging unit may charge a chemical solution into the resin tower. The chemical solution may be HCl (hydrochloric acid) or NaOH (sodium hydroxide).

The image sensor may measure a resin height in the resin tower.

The electrolysis tank may be provided with the detection unit. The detection unit may be provided in an anode chamber. The detection unit detects an object to be detected. The object to be detected may include at least one of the ion of alkali earth metal, the aluminum ion ($Al^{3+}$), the nickel ion ($Ni^{2+}$), the iron ions ($Fe^{2+}$, $Fe^{3+}$), the iodine ion ($I^-$), the silicon (Si), the sulfate ion ($SO_4^{2-}$), the suspended matter, or the organic matter included in the liquid.

The operation support apparatus may further include an instruction unit which instructs the electrolysis tank to take at least one of the first countermeasure or the second countermeasure.

If the detection unit detects the object to be detected in the liquid, the instruction unit may instruct the chemical agent charging unit to charge the chemical agent into the reaction tank.

If the impurity sensor detects the ion of alkali earth metal, the instruction unit may instruct the pure water charging unit to charge the pure water into the resin tower.

The ion of alkali earth metal may include at least one of a calcium ion ($Ca^{2+}$), a magnesium ion ($Mg^{2+}$), a strontium ion ($Sr^{2+}$), or a barium ion ($Ba^{2+}$).

The instruction unit may instruct the pure water charging unit to charge the pure water such that the pure water flows in a direction opposite to a direction in which the liquid flows.

The determination unit may determine whether a back washing speed of the ion exchange resin is above a predetermined back washing speed threshold value.

The flow rate sensor may measure a flow rate of the pure water. The determination unit may calculate the back washing speed of the ion exchange resin based on the flow rate of the pure water measured by the flow rate sensor. The determination unit may determine whether the calculated back washing speed is above the predetermined back washing speed threshold value. If it is determined by the determination unit that the back washing speed is above the predetermined back washing speed threshold value, the instruction unit may instruct the pure water charging unit to charge the pure water.

The image sensor may measure the resin height of the resin tower. The determination unit may determine whether the resin height measured by the image sensor is above a predetermined resin height threshold value. If it is determined by the determination unit that the resin height is above the resin height threshold value, the instruction unit may instruct the chemical solution charging unit to charge the chemical solution into the resin tower.

The operation support apparatus may further include a storage unit which stores the first factor, the first impurity corresponding to the first factor, and the first countermeasure corresponding to the first factor.

The operation support apparatus may further include a storage unit which stores the second factor, the second impurity corresponding to the second factor, and the second countermeasure corresponding to the second factor.

At least one of the production efficiency threshold value or the voltage threshold value may change as working time of the electrolysis tank elapses.

The operation support apparatus may further include a pH acquisition unit and a production efficiency calculation unit which calculates the production efficiency of the electrolysis tank. The electrolysis tank may have an ion exchange membrane, and an anode chamber and a cathode chamber which are separated by the ion exchange membrane. An aqueous solution of alkali metal chloride may be introduced into the anode chamber. The pH acquisition unit may acquire pH of the aqueous solution of alkali metal chloride introduced into the anode chamber. The production efficiency calculation unit may calculate the production efficiency of the electrolysis tank based on the pH of the aqueous solution of alkali metal chloride acquired by the pH acquisition unit. The production efficiency acquisition unit may acquire the production efficiency of the electrolysis tank calculated by the production efficiency calculation unit.

The aqueous solution of alkali metal chloride may be a sodium chloride aqueous solution or a potassium chloride aqueous solution. If the sodium chloride aqueous solution is introduced into the anode chamber, a sodium hydroxide aqueous solution may be introduced into the cathode chamber. If the potassium chloride aqueous solution is introduced into the anode chamber, a potassium hydroxide aqueous solution may be introduced into the cathode chamber, the operation support apparatus may further include a concentration calculation unit which calculates, based on the pH acquired by the pH acquisition unit, an oxygen concentration, a hypochlorous acid concentration, and a sodium chlorate concentration in the anode chamber, as well as a hydrogen ion concentration and a hydroxide ion concentration of the sodium chloride aqueous solution or the potassium chloride aqueous solution introduced into the anode chamber. The production efficiency calculation unit may calculate the production efficiency of the electrolysis tank based on the oxygen concentration, the hypochlorous acid concentration, and the sodium chlorate concentration in the anode chamber as well as the hydroxide ion concentration of the sodium chloride aqueous solution or the potassium chloride aqueous solution introduced into the anode chamber and the hydrogen ion concentration of the sodium chloride aqueous solution or the potassium chloride aqueous solution led out of the anode chamber, which are calculated by the concentration calculation unit.

The concentration calculation unit may calculate a first relationship between pH of the sodium chloride aqueous solution or the potassium chloride aqueous solution and the oxygen concentration, calculate a second relationship between the pH of the sodium chloride aqueous solution or the potassium chloride aqueous solution and the hypochlorous acid concentration, calculate a third relationship between the pH of the sodium chloride aqueous solution or the potassium chloride aqueous solution and the sodium chlorate concentration, calculate a fourth relationship between the pH of the sodium chloride aqueous solution or the potassium chloride aqueous solution and the hydrogen ion concentration, and calculate a fifth relationship between the pH of the sodium chloride aqueous solution or the potassium chloride aqueous solution and the hydroxide ion concentration. The concentration calculation unit may calculate the oxygen concentration based on the pH acquired by the pH acquisition unit and on the first relationship, calculate the hypochlorous acid concentration based on the pH acquired by the pH acquisition unit and on the second relationship, calculate the sodium chlorate concentration based on the pH acquired by the pH acquisition unit and on the third relationship, calculate the hydrogen ion concentration based on the pH acquired by the pH acquisition unit and on the fourth relationship, and calculate the hydroxide ion concentration based on the pH acquired by the pH acquisition unit and on the fifth relationship.

A second aspect of the the present invention provides an operation support system. The operation support system includes the operation support apparatus and an electrolysis tank.

A third aspect of the present invention provides an operation support method. The operation support method includes: acquiring, by a production efficiency acquisition unit, production efficiency of an electrolysis tank; first determining, by a determination unit, whether the production efficiency of the electrolysis tank acquired in the acquiring the production efficiency is below a predetermined production efficiency threshold value; and if it is determined in the first determining that the production efficiency of the electrolysis tank is below the production efficiency threshold value, first identifying, by an identification unit, a first factor for which the production efficiency of the electrolysis tank has fallen below the production efficiency threshold value.

The acquiring the production efficiency may be acquiring, by the production efficiency acquisition unit, the production efficiency of the electrolysis tank in real time. The first determining may be determining in real time, by the determination unit, whether the production efficiency of the electrolysis tank is below the production efficiency threshold value. The first identifying may be identifying, by the identification unit, the first factor in real time.

The production efficiency may be current efficiency. The first determining may be determining, by the determination unit, whether the current efficiency is below a predetermined current efficiency threshold value.

The operation support method may further include: acquiring, by a voltage acquisition unit, voltage to be supplied to the electrolysis tank; if it is determined in the first determining that the current efficiency of the electrolysis tank is equal to or greater than a predetermined current efficiency threshold value, second determining, by the determination unit, whether the voltage acquired in the acquiring the voltage is above a predetermined voltage threshold value; and if it is determined in the second determining that the voltage is above the voltage threshold value, second identifying, by the identification unit, a second factor for which the voltage has gone above the voltage threshold value.

The operation support method may further include calculating, by the determination unit, an electric power consumption rate of the electrolysis tank based on at least one of the current efficiency or the voltage. The production efficiency may be the current efficiency, or the electric power consumption rate calculated in the calculating the electric power consumption rate.

The operation support method may further include third determining, by the determination unit, whether the electric power consumption rate is equal to or greater than a predetermined electric power consumption rate threshold value, if the production efficiency is the electric power consumption rate. If it is determined in the third determining that the electric power consumption rate of the electrolysis tank is equal to or greater than the electric power consumption rate threshold value, the first identifying may be identifying, by the identification unit, the first factor, and the second identifying may be identifying, by the identification unit, the second factor.

The acquiring the voltage may be acquiring in real time, by the voltage acquisition unit, the voltage to be supplied to the electrolysis tank. The second determining may be determining in real time, by the determination unit, whether the voltage is above the voltage threshold value. The second identifying may be identifying, by the identification unit, the second factor in real time.

The first identifying may be identifying, by the identification unit, a first impurity which is in the electrolysis tank and corresponds to the first factor, and identifying, by the identification unit, a first countermeasure which corresponds to the first factor and is for suppressing a decrease in the production efficiency of the electrolysis tank and recovering the production efficiency. The second identifying may be identifying, by the identification unit, a second impurity which is in the electrolysis tank and corresponds to the second factor, and identifying, by the identification unit, a second countermeasure which corresponds to the second factor and is for suppressing an increase in the voltage and recovering the voltage. The operation support method may further include first instructing, by an instruction unit, the electrolysis tank to take the first countermeasure, or second instructing, by the instruction unit, the electrolysis tank to take the second countermeasure.

The operation support method may support operation of an electrolytic apparatus. The electrolytic apparatus may be provided with a raw salt dissolution layer, a sedimentation and separation tank, a chemical agent charging unit, a filter, a reaction tank, a resin tower, an ion exchange resin, a pure water charging unit, a chemical solution charging unit, an impurity sensor, an image sensor, and a detection unit.

The first identifying or the second identifying may have first detecting, by the detection unit, detecting an object to be detected. The first instructing may be instructing, by the instruction unit, the chemical agent charging unit to charge a chemical agent to the reaction tank, if the object to be detected is detected in the first identifying. The second instructing may be instructing, by the instruction unit, the chemical agent charging unit to charge the chemical agent to the reaction tank, if the object to be detected is detected in the second identifying.

The first identifying or the second identifying may be detecting, by the impurity sensor, an ion of alkali earth metal. The first instructing may be instructing, by the instruction unit, the pure water charging unit to charge pure water into the resin tower, if the ion of alkali earth metal is detected in the first identifying. The second instructing may be instructing, by the instruction unit, the pure water charging unit to charge the pure water into the resin tower, if the ion of alkali earth metal is detected in the second identifying.

The first identifying or the second identifying may have measuring, by the flow rate sensor, a flow rate of the pure water, calculating, by the determination unit, a back washing speed of the ion exchange resin based on the flow rate of the pure water measured by the flow rate sensor, and fourth determining, by the determination unit, whether the back washing speed of the ion exchange resin is above a predetermined back washing speed threshold value. If it is determined in the fourth determining that the back washing speed is above the predetermined back washing speed threshold value, the first instructing may be instructing, by the instruction unit, the pure water charging unit to charge the pure water. If it is determined in the fourth determining that the back washing speed is above the predetermined back washing speed threshold value, the second instructing may be instructing, by the instruction unit, the pure water charging unit to charge the pure water.

The first identifying or the second identifying may have measuring, by the image sensor, a resin height of the resin tower, and fifth determining, by the determination unit, whether the resin height measured by the image sensor 120 is above a predetermined resin height threshold value. If it is determined in the fifth determining that the resin height is above the resin height threshold value, the first instructing may be instructing, by the instruction unit, the chemical solution charging unit to charge the chemical solution into the resin tower. If it is determined in the fifth determining that the resin height is above the resin height threshold value, the second instructing may be instructing, by the instruction unit, the chemical solution charging unit to charge the chemical solution into the resin tower.

A fourth aspect of the present invention provides an operation support program. The operation support program causes a computer to execute an operation support method.

Note that the above-described summary clause does not necessarily describe all necessary features of the embodiments of the present invention. In addition, the invention may also be a sub-combination of the features described above.

BRIEF DESCRIPTION OF THE DRAWINGS

Fig. 1 shows an example of an electrolytic apparatus 200 according to one embodiment of the present invention.

Fig. 2 shows an example of the electrolytic apparatus 200 according to one embodiment of the present invention.

Fig. 3 shows an example of details of one electrolysis cell 91 in Fig. 2.

Fig. 4 is an enlarged view of a vicinity of an ion exchange membrane 84 in the electrolysis cell 91 shown in Fig. 3.

Fig. 5 shows an example of a block diagram of an operation support apparatus 100 according to one embodiment of the present invention.

Fig. 6 shows an example of a display mode in a display unit 62.

Fig. 7 shows another example of a display mode in the display unit 62.

Fig. 8 shows another example of a block diagram of the operation support apparatus 100 according to one embodiment of the present invention.

Fig. 9 shows another example of a display mode in the display unit 62.

Fig. 10 shows another example of a display mode in the display unit 62.

Fig. 11 shows another example of a block diagram of the operation support apparatus 100 according to one embodiment of the present invention.

Fig. 12 is a schematic view showing a first impurity Im1 and a second impurity Im2 which are attached to the ion exchange membrane 84.

Fig. 13 shows another example of a block diagram of the operation support apparatus 100 according to one embodiment of the present invention.

Fig. 14 is a schematic view showing a chemical reaction in an anode chamber 79, of $OH^-$ (hydroxide ion) which has passed through the ion exchange membrane 84.

Fig. 15 shows an example of an operation support system 300 according to one embodiment of the present invention.

Fig. 16 is an example of a first flowchart including an operation support method according to one embodiment of the present invention.

Fig. 17 is an example of a second flowchart including an operation support method according to one embodiment of the present invention.

Fig. 18 is another example of a second flowchart including an operation support method according to one embodiment of the present invention.

Fig. 19 shows an example of details of a first identification step S112 or a second identification step S212 shown in Fig. 17.

Fig. 20 shows another example of details of the first identification step S112 or the second identification step S212 shown in Fig. 17.

Fig. 21 shows another example of details of the first identification step S112 or the second identification step S212 shown in Fig. 17.

Fig. 22 shows another example of details of the first identification step S112 or the second identification step S212 shown in Fig. 17.

Fig. 23 shows an example of a computer 2200 in which the operation support apparatus 100 according to an embodiment of the present invention may be entirely or partially embodied.

DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

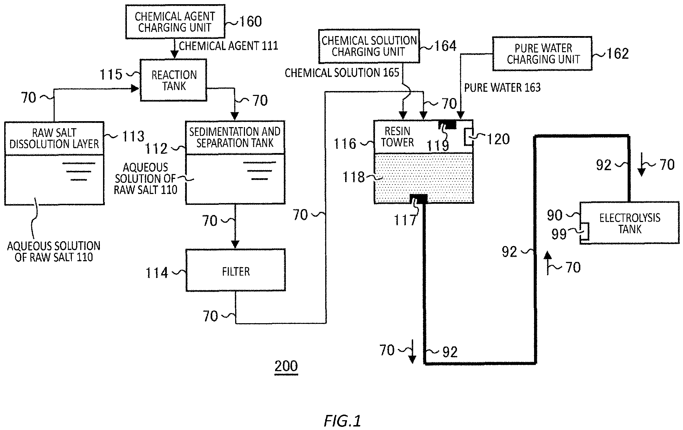

Fig. 1 shows an example of an electrolytic apparatus 200 according to one embodiment of the present invention. The electrolytic apparatus 200 of the present example includes an electrolysis tank 90. The electrolytic apparatus 200 of the present example is provided with a raw salt dissolution layer 113, a sedimentation and separation tank 112, a chemical agent charging unit 160, a filter 114, a reaction tank 115, a resin tower 116, a pure water charging unit 162, a chemical solution charging unit 164, an image sensor 120, an introduction tube 92, and a detection unit 99.

The raw salt 110 is dissolved in the raw salt dissolution layer 113. The raw salt 110 is alkali metal chloride. The raw salt 110 is, for example, NaCl (sodium chloride) or KCl (potassium chloride). An aqueous solution of the raw salt 110 is an aqueous solution of alkali metal chloride. The aqueous solution is defined as liquid 70.

The raw salt 110 may include an element of alkali earth metal. The element of alkali earth metal which may be included in the raw salt 110 is, for example, Ca (calcium), Sr (strontium), Ba (barium), or Mg (magnesium).

The chemical agent charging unit 160 charges a chemical agent 111 into the reaction tank 115. The chemical agent 111 being charged into the aqueous solution of the raw salt 110 solidifies, in the reaction tank 115, an impurity which may degrade ion exchange performance of an ion exchange membrane 84 (to be described later). The impurity may be included in a first impurity Im1 or a second impurity Im2 to be described later. The chemical agent 111 is, for example, $Mg(OH)_2$ (magnesium hydroxide) or $CaCO_3$ (calcium carbonate). The introduction tube 92 is connected to the electrolysis tank 90.

The sedimentation and separation tank 112 precipitates the above-described impurity solidified in the reaction tank 115. The sedimentation and separation tank 112 precipitates the first impurity Im1 (to be described later) or the second impurity Im2 (to be described later) which may degrade the ion exchange performance of the ion exchange membrane 84 (to be described later), thereby separating the aqueous solution of the raw salt 110 from the first impurity Im1 (to be described later) or the second impurity Im2 (to be described later). The first impurity Im1 (to be described later) or the second impurity Im2 (to be described later) includes a so-called suspended solid (SS) or the like. The sedimentation and separation tank 112 is, for example, a clarifier. In the present example, the liquid 70 from which the first impurity Im1 (to be described later) or the second impurity Im2 (to be described later) has been separated is introduced into the filter 114.

The liquid 70 passes through the filter 114. At least part of the first impurity Im1 (to be described later) or the second impurity Im2 (to be described later) remaining in the liquid 70 is removed from the liquid 70 by passing through the filter 114. The filter 114 is, for example, a ceramic filter, a precoat-type pleated filter, or the like. In the present example, the liquid 70 which has passed through the filter 114 is introduced into the resin tower 116.

In the present example, the resin tower 116 is provided with an ion exchange resin 118, an impurity sensor 117, and a flow rate sensor 119. The ion exchange resin 118 removes an ion of alkali earth metal. The pure water charging unit 162 charges pure water 163 into the resin tower 116. The chemical solution charging unit 164 charges a chemical solution 165 into the resin tower 116. The chemical solution 165 is, for example, HCl (hydrochloric acid), NaOH (sodium hydroxide), or the like.

The impurity sensor 117 detects at least one of the ion of alkali earth metal, an aluminum ion ($Al^{3+}$), a nickel ion ($Ni^{2+}$), iron ions ($Fe^{2+}$, $Fe^{3+}$), an iodine ion ($I^-$), silicon (Si), a sulfate ion ($SO_4^{2-}$), a suspended matter, or an organic matter. The ion of alkali earth metal is, for example, at least one of a calcium ion ($Ca^{2+}$), a magnesium ion ($Mg^{2+}$), a strontium ion ($Sr^{2+}$), or a barium ion ($Ba^{2+}$). The suspended matter and the organic matter are, for example, the suspended solid (SS) and a total organic carbon (TOC). The impurity Im described above may refer to at least one of the suspended solid (SS) or the total organic carbon (TOC).

The liquid 70 from which the filter 114 has removed at least part of the first impurity Im1 (to be described later) or the second impurity Im2 (to be described later) passes through the ion exchange resin 118. The ion exchange resin 118 removes at least part of the first impurity Im1 (to be described later) or the second impurity Im2 (to be described later) included in the liquid 70. In the present example, the first impurity Im1 (to be described later) or the second impurity Im2 (to be described later) included in the liquid 70 is removed by the filter 114, and is further removed by the ion exchange resin 118.

The image sensor 120 may be provided in a resin window in the resin tower 116. The image sensor 120 measures a resin height in the resin tower 116.

The electrolysis tank 90 is provided with a detection unit 99. The detection unit 99 will be described later.

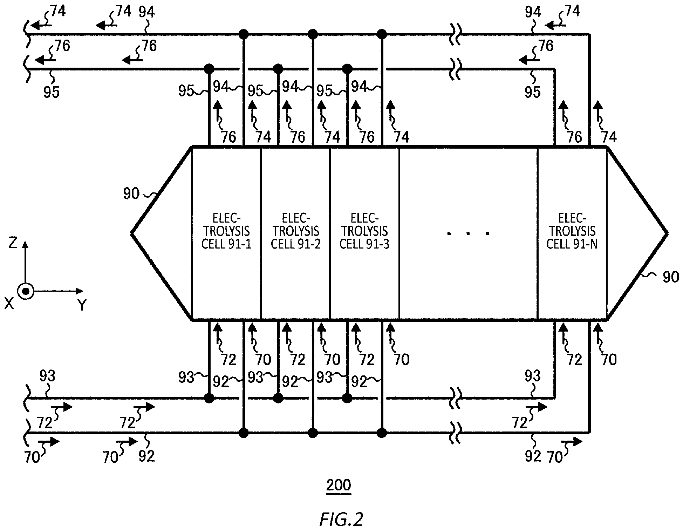

Fig. 2 shows an example of the electrolytic apparatus 200 according to one embodiment of the present invention. The electrolytic apparatus 200 of the present example includes the electrolysis tank 90, the introduction tube 92, an introduction tube 93, a lead-out tube 94, and a lead-out tube 95.

The electrolytic apparatus 200 electrolyzes an electrolysis solution. In the present example, the electrolytic apparatus 200 generates $Cl_2$ (chlorine), NaOH (sodium hydroxide), and $H_2$ (hydrogen) by electrolyzing a NaCl (sodium chloride) aqueous solution, or generates the $Cl_2$ (chlorine), KOH (potassium hydroxide), and the $H_2$ (hydrogen) by electrolyzing a KCl (potassium chloride) aqueous solution.

The electrolysis tank 90 electrolyzes the electrolysis solution. The electrolysis tank 90 of the present example electrolyzes the NaCl (sodium chloride) aqueous solution, or electrolyzes the KCl (potassium chloride) aqueous solution. The electrolysis tank 90 may include a plurality of electrolysis cells 91 (electrolysis cells 91-1 to 91-N, where N is an integer equal to or greater than 2). N is, for example, 50.

In the present example, the introduction tube 92 and the introduction tube 93 are connected to each of the electrolysis cells 91-1 to 91-N. The liquid 70 is introduced into each of the electrolysis cells 91-1 to 91-N. The liquid 70 may be introduced into each of the electrolysis cells 91-1 to 91-N after passing through the introduction tube 92. The liquid 70 is an aqueous solution of alkali metal chloride. Alkali metal is an element which belongs to the group 1 of the periodic table of elements. The liquid 70 may be the NaCl (sodium chloride) aqueous solution, or may be the KCl (potassium chloride) aqueous solution.

The liquid 72 is introduced into each of the electrolysis cells 91-1 to 91-N. The liquid 72 may be introduced into each of the electrolysis cells 91-1 to 91-N after passing through the introduction tube 93. The liquid 72 is an aqueous solution of alkali metal hydroxide. If the liquid 70 is the NaCl (sodium chloride) aqueous solution, the liquid 72 is a NaOH (sodium hydroxide) aqueous solution. If the liquid 70 is the KCl (potassium chloride) aqueous solution, the liquid 72 is a KOH (potassium hydroxide) aqueous solution.

In the present example, the lead-out tube 94 and the lead-out tube 95 are connected to each of the electrolysis cells 91-1 to 91-N. Liquid 76 and gas 78 (to be described later) are led out of each of the electrolysis cells 91-1 to 91-N. The liquid 76 and the gas 78 (to be described later) may be led out of the electrolytic apparatus 200 after passing through the lead-out tube 95. The liquid 76 is the aqueous solution of alkali metal hydroxide. If the liquid 70 is the NaCl (sodium chloride) aqueous solution, the liquid 76 is the NaOH (sodium hydroxide) aqueous solution. If the liquid 70 is the KCl (potassium chloride) aqueous solution, the liquid 76 is the KOH (potassium hydroxide) aqueous solution. The gas 78 (to be described later) may be the $H_2$ (hydrogen).

Liquid 74 and gas 77 (to be described later) are led out of each of the electrolysis cells 91-1 to 91-N. The liquid 74 and the gas 77 (to be described later) may be led out of the electrolytic apparatus 200 after passing through the lead-out tube 94. The liquid 74 is the aqueous solution of alkali metal chloride. If the liquid 70 is the NaCl (sodium chloride) aqueous solution, the liquid 74 is the NaCl (sodium chloride) aqueous solution. If the liquid 70 is the KCl (potassium chloride) aqueous solution, the liquid 74 is the KCl (potassium chloride) aqueous solution. The gas 77 (to be described later) may be the $Cl_2$ (chlorine).

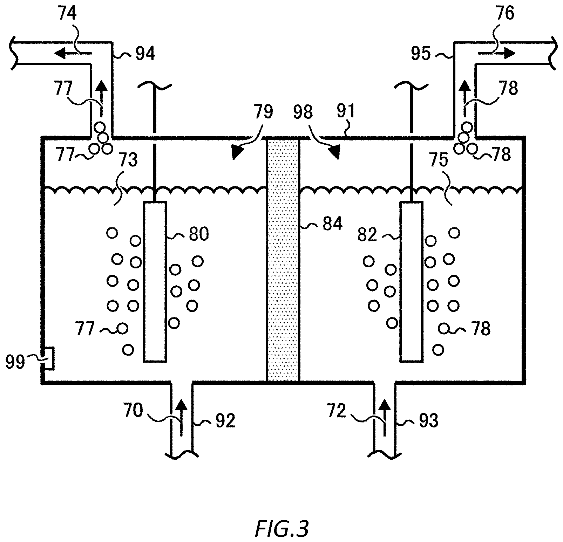

Fig. 3 shows an example of details of one electrolysis cell 91 in Fig. 2. The electrolysis tank 90 has an anode chamber 79, an anode 80, a cathode chamber 98, a cathode 82, and the ion exchange membrane 84. In the present example, the one electrolysis cell 91 has the anode chamber 79, the anode 80, the cathode chamber 98, the cathode 82, and the ion exchange membrane 84. The anode chamber 79 and the cathode chamber 98 are provided inside the electrolysis cell 91. The anode chamber 79 and the cathode chamber 98 are separated by the ion exchange membrane 84. The anode 80 is arranged in the anode chamber 79. The cathode 82 is arranged in the cathode chamber 98.

The introduction tube 92 and the lead-out tube 94 are connected to the anode chamber 79. The introduction tube 93 and the lead-out tube 95 are connected to the cathode chamber 98. The liquid 70 is introduced into the anode chamber 79. The liquid 72 is introduced into the cathode chamber 98.

The detection unit 99 (see this figure and Fig. 1) may be provided in the anode chamber 79. The detection unit 99 detects at least one of an ion of alkali earth metal, an aluminum ion ($Al^{3+}$), a nickel ion ($Ni^{2+}$), iron ions ($Fe^{2+}$, $Fe^{3+}$), an iodine ion ($I^-$), silicon (Si), a sulfate ion ($SO_4^{2-}$), a suspended matter, or an organic matter included in the liquid 70. The above-described objects to be detected by the detection unit 99 are defined as objects to be detected Db.

The ion exchange membrane 84 is a membranal substance which prevents passage of an ion having the same sign as an ion arranged in the ion exchange membrane 84 and which allows passage of only an ion having the opposite sign. In the present example, the ion exchange membrane 84 is a cation exchange membrane which prevents passage of an ion having the same sign (that is, anion) as an anion (anionic group 86 to be described later) arranged in the ion exchange membrane 84 and which allows passage of only an ion having the opposite sign (that is, cation). If the liquid 70 is a NaCl (sodium chloride) aqueous solution and the liquid 72 is an aqueous solution of alkali metal hydroxide, the ion exchange membrane 84 allows passage of $Na^+$ (sodium ion) or $K^+$ (potassium ion) and prevents passage of $Cl^-$ (chloride ion).

The anode 80 and the cathode 82 may be maintained respectively at a predetermined positive potential and negative potential. The liquid 70 introduced into the anode chamber 79 and the liquid 72 introduced into the cathode chamber 98 are electrolyzed with a potential difference between the anode 80 and the cathode 82. The following chemical reaction is caused in the anode 80.

$$\text{(Chemical Formula 1)} \qquad 2Cl^- \rightarrow Cl_2 + 2e^-$$

If the liquid 70 is the NaCl (sodium chloride) aqueous solution, NaCl (sodium chloride) is ionized into the $Na^+$ (sodium ion) and the $Cl^-$ (chloride ion). $Cl_2$ (chlorine) gas is generated in the anode 80 by the chemical reaction shown in Chemical Formula 1. The gas 77 (the $Cl_2$ (chlorine) gas) and the liquid 74 may be led out of the anode chamber 79. The $Na^+$ (sodium ion) moves from the anode chamber 79 to the cathode chamber 98 after passing through the ion exchange membrane 84 due to attractive force from the cathode 82.

The anode chamber 79 may retain liquid 73. The liquid 73 is an aqueous solution of alkali metal chloride. In the present example, the liquid 73 is the NaCl (sodium chloride) aqueous solution. An $Na^+$ (sodium ion) concentration and a $Cl^-$ (chloride ion) concentration of the liquid 73 may be less than an $Na^+$ (sodium ion) concentration and a $Cl^-$ (chloride ion) concentration of the liquid 70.

The following chemical reaction is caused in the cathode 82.

$$\text{(Chemical Formula 2)} \qquad 2H_2O + 2e \rightarrow H_2 + 2OH^-$$

If the liquid 72 is a NaOH (sodium hydroxide) aqueous solution, NaOH (sodium hydroxide) is ionized into the $Na^+$ (sodium ion) and $OH^-$ (hydroxide ion). The cathode chamber 98 may retain liquid 75. The liquid 75 is the aqueous solution of alkali metal hydroxide. In the present example, the liquid 75 is the NaOH (sodium hydroxide) aqueous solution. In the present example, $H_2$ (hydrogen) gas and the $OH^-$ (hydroxide ion) are generated in the cathode 82 by the chemical reaction shown in Chemical Formula 2. The gas 78 (the $H_2$ (hydrogen) gas) and the liquid 76 may be led out of the cathode chamber 98.

In the present example, the cathode chamber 98 retains the liquid 75 in which the $OH^-$ (hydroxide ion) generated by the chemical reaction shown in Chemical Formula 2 and the $Na^+$ (sodium ion) moved from the anode chamber 79 are dissolved.

If the NaCl (sodium chloride) aqueous solution is introduced into the anode chamber 79, the NaOH (sodium hydroxide) aqueous solution may be introduced into the cathode chamber 98. If a KCl (potassium chloride) aqueous solution is introduced into the anode chamber 79, a KOH (potassium hydroxide) aqueous solution may be introduced into the cathode chamber 98.

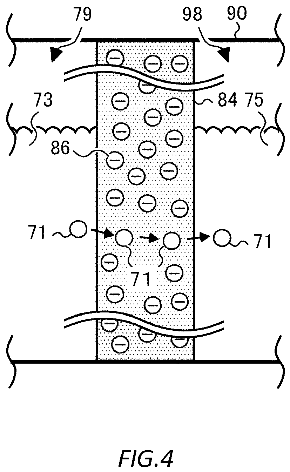

Fig. 4 is an enlarged view of a vicinity of the ion exchange membrane 84 in the electrolysis cell 91 shown in Fig. 3. The anionic group 86 is fixed to the ion exchange membrane 84 of the present example. An anion is repelled by the anionic group 86, and therefore hardly passes through the ion exchange membrane 84. In the present example, the anion is $Cl^-$ (chloride ion). The cation 71 is not repelled by the anionic group 86, and therefore can pass through the ion exchange membrane 84. If the liquid 70 (see Fig. 3) is a NaCl (sodium chloride) aqueous solution, the cation 71 is $Na^+$ (sodium ion).

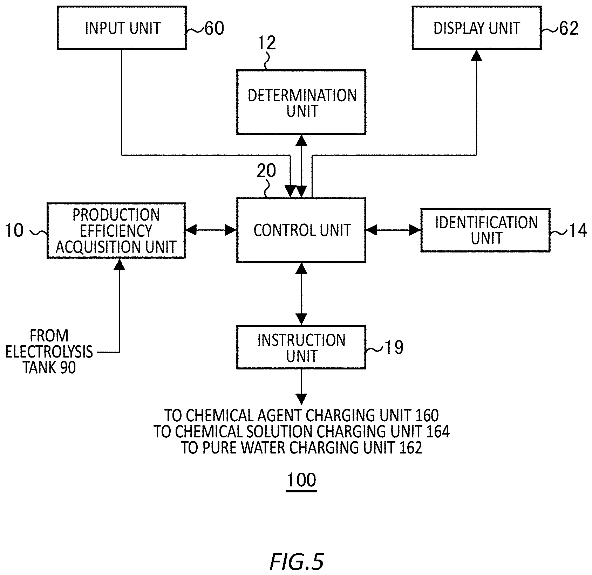

Fig. 5 shows an example of a block diagram of an operation support apparatus 100 according to one embodiment of the present invention. The operation support apparatus 100 supports operation of the electrolysis tank 90 (see Fig. 2). The operation support apparatus 100 includes a production efficiency acquisition unit 10, a determination unit 12, an identification unit 14, an instruction unit 19, and a control unit 20. The operation support apparatus 100 may include an input unit 60 and a display unit 62.

The operation support apparatus 100 is a computer including a CPU, a memory, an interface, and the like, as an example. The control unit 20 may be the CPU. If the operation support apparatus 100 is a computer, the computer may be installed with an operation support program that causes an operation support method described later to be executed, or may be installed with an operation support program that causes the computer to function as the operation support apparatus 100.

The input unit 60 is, for example, a keyboard, a mouse, or the like. The display unit 62 is, for example, a display, a monitor, or the like.

The production efficiency acquisition unit 10 acquires production efficiency of the electrolysis tank 90. The production efficiency is defined as production efficiency PE. A product produced by the electrolysis tank 90 is defined as a product P. A theoretical amount of production of the product P is defined as an amount of production Pa. An actual amount of production of the product P is defined as an amount of production Pr. The production efficiency PE refers to a percentage of the amount of production Pr to the amount of production Pa per unit time and per unit electric energy.

The production efficiency acquisition unit 10 may acquire current efficiency of the electrolysis tank 90. The current efficiency is defined as current efficiency CE.

The production efficiency acquisition unit 10 may acquire the production efficiency PE for each of the plurality of electrolysis cells 91 (see Fig. 2). The amount of production Pa is calculated based on maximum current flowing through the electrolysis tank 90. The production efficiency acquisition unit 10 may acquire the production efficiency PE for each of the plurality of electrolysis cells 91. If the liquid 70 is a NaCl (sodium chloride) aqueous solution and the liquid 72 is a NaOH (sodium hydroxide) aqueous solution, the product P is NaOH (sodium hydroxide, so-called caustic soda).

The determination unit 12 determines whether the production efficiency PE is below a predetermined production efficiency threshold value. The production efficiency threshold value is defined as a threshold value Tp. The production efficiency PE at a time point where use of the ion exchange membrane 84 (see Fig. 3) was started is defined as production efficiency PEs. The production efficiency PE after a predetermined time T has elapsed since the time point where the use of the ion exchange membrane 84 was started is defined as production efficiency PEe.

While the electrolysis tank 90 (see Fig. 2) is working, substances included in the liquid 73 and the liquid 75 (see Fig. 3) easily come into contact with the ion exchange membrane 84 (see Fig. 3). Among the substances, there may be a substance which causes degradation of ion exchange performance of the ion exchange membrane 84 by accumulating on the ion exchange membrane 84. Accordingly, the production efficiency PE easily decreases as working time of the electrolysis tank 90 elapses. Accordingly, the production efficiency PEe is likely to be less than the production efficiency PEs.

The fact that the production efficiency PE is below the threshold value Tp may mean that a percentage of the production efficiency PEe to the production efficiency PEs is below predetermined percentage. The predetermined percentage is, for example, 1%. The time T is, for example, one year. The time point where the use of the ion exchange membrane 84 was started may be a time point where the use of the ion exchange membrane 84 which is unused was started.

The production efficiency PE may be continuously acquired while the electrolysis tank 90 is working. The production efficiency PE may be an average value or a median value of production efficiencies PE acquired over a predetermined time t. The time t may be less than the time T. The time t is, for example, 12 hours.

The threshold value Tp may change with the working time of the electrolysis tank 90 (see Fig. 2). For example, the percentage of the production efficiency PE after two years have elapsed since the time point where the use of the ion exchange membrane 84 (see Fig. 3) was started, to the production efficiency PE after one year has elapsed may be different from the percentage of the production efficiency PEe to the production efficiency PEs, and may be less than the percentage of the production efficiency PEe to the production efficiency PEs. The threshold value Tp may be set based on an ion exchange property of the ion exchange membrane 84. The ion exchange property of the ion exchange membrane 84 may refer to the ion exchange performance of the ion exchange membrane 84.

If it is determined by the determination unit 12 that the production efficiency PE is below the threshold value Tp, the identification unit 14 identifies a first factor for which the production efficiency PE has fallen below the threshold value Tp. The first factor is defined as a first factor F1. The identification unit 14 may identify, from a plurality of predetermined first factors F1, one or more first factors F1 which have probably caused the production efficiency PE to fall below the threshold value Tp. The one or more first factors F1 may be candidates for the first factor F1. The display unit 62 may display the one or more first factors F1 identified by the identification unit 14.

The production efficiency acquisition unit 10 may continuously acquire the production efficiency PE. The production efficiency acquisition unit 10 may acquire in real time the production efficiency PE for while the electrolysis tank 90 is working. Acquiring the production efficiency PE in real time means acquiring, in less than a predetermined time, the production efficiency PE for while the electrolysis tank 90 is working. The predetermine time may be 0.5 seconds, may be 1 second, or may be 5 seconds. In the present specification, the real time refers to the predetermined time.

The determination unit 12 may continuously determine whether the production efficiency PE is below the threshold value Tp. The determination unit 12 may determine in real time whether the production efficiency PE is below the threshold value Tp while the electrolysis tank 90 is working. The identification unit 14 may continuously identify the first factor F1 for which the production efficiency PE has fallen below the threshold value Tp. The identification unit 14 may identify the first factor F1 in real time while the electrolysis tank 90 is working. The display unit 62 may display the first factor F1 in real time.

As described above, in the operation support apparatus 100, the identification unit 14 identifies the first factor F1 for which the production efficiency PE of the electrolysis tank 90 has fallen below the threshold value Tp. Accordingly, a user of the operation support apparatus 100 can recognize the first factor F1.

The identification unit 14 may identify a first impurity in the electrolysis tank 90 (see Fig. 2). The first impurity is defined as the first impurity Im1. The first impurity Im1 corresponds to the first factor F1. The first impurity Im1 may cause the production efficiency PE to fall below the threshold value Tp. The identification unit 14 may identify the type of the first impurity Im1. The type of the first impurity Im1 may be the type of substance or the type of element for the first impurity Im1.

The identification unit 14 may identify, from a plurality of predetermined first impurities Im1, one or more first impurities Im1 which have probably caused the production efficiency PE to fall below the threshold value Tp. The first impurities Im1 may be candidates for the first impurity Im1. The identification unit 14 may identify the plurality of first impurities Im1 respectively corresponding to the plurality of first factors F1.

The identification unit 14 may identify a first countermeasure for suppressing a decrease in the production efficiency PE and recovering the production efficiency PE. The first countermeasure is defined as a first countermeasure Cm1. The first countermeasure Cm1 may correspond to the first factor. The identification unit 14 may identify, from a plurality of predetermined first countermeasures Cm1, one or more first countermeasures Cm1 respectively corresponding to the one or more first factors F1. The first countermeasures Cm1 may be candidates for the first countermeasure Cm1. The identification unit 14 may identify the first impurity Im1, and identify the first countermeasure Cm1. The identification unit 14 may identify the first factor F1, the first impurity Im1, and the first countermeasure Cm1 in real time. This allows the user of the operation support apparatus 100 to take the first countermeasure Cm1 without stopping the electrolysis tank 90 which is working.

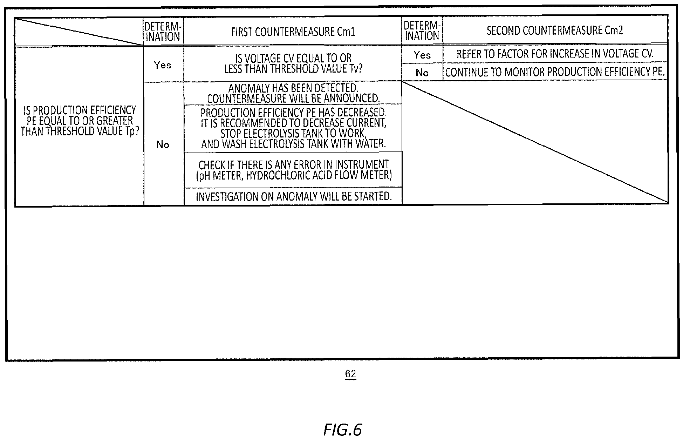

Fig. 6 shows an example of a display mode in the display unit 62. The display unit 62 may display a result of determination regarding whether the production efficiency PE is below the threshold value Tp. The display unit 62 may also display the first countermeasure Cm1. If it is determined that the production efficiency PE is equal to or greater than the threshold value Tp (if it is determined as Yes), the display unit 62 may display a result of determination as to whether voltage CV (to be described later) is equal to or less than a threshold value Tv (to be described later). The display unit 62 may display a second countermeasure Cm2 (to be described later) corresponding to each result of determination as to whether the voltage CV (to be described later) is equal to or less than the threshold value Tv (to be described later).

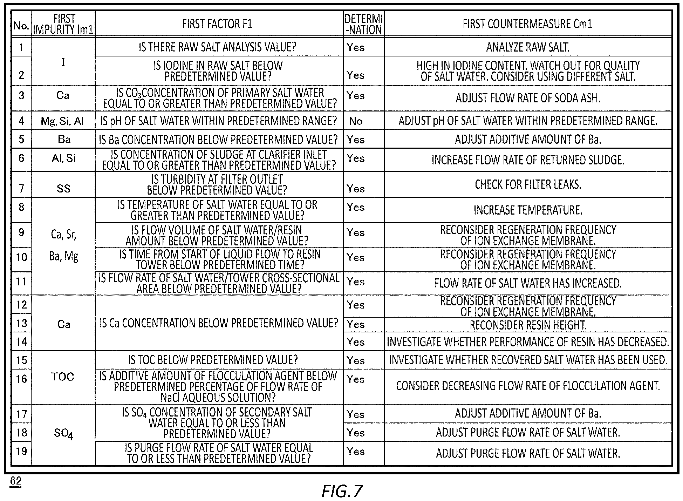

Fig. 7 shows another example of a display mode in the display unit 62. The display unit 62 may display the first factor F1, the first impurity Im1, and the first countermeasure Cm1. The display unit 62 may display the plurality of first impurities Im1 and the plurality of first countermeasures Cm1 respectively corresponding to the plurality of first factors F1. The display unit 62 may display, for each of the first factors F1, the first impurity Im1 and the first countermeasure Cm1 corresponding to the first factor F1.

The display unit 62 may display a predetermined first factor F1. The display unit 62 may display a plurality of first factors F1. In the example of Fig. 7, sixteen first factors F1 numbered from No. 1 to No. 19 are displayed. The display unit 62 may emphatically display the first factor F1, the first impurity Im1, and the first countermeasure Cm1 identified by the identification unit 14 among the predetermined first factors F1, first impurities Im1, and first countermeasures Cm1. Emphatically displaying means, for example, displaying the first factor F1 or the like identified by the identification unit 14 in a color different from when displaying another first factor F1, for example.

"Raw salt" shown in Fig. 7 refers to the raw salt 110 shown in Fig. 1. "Salt water" shown in Fig. 7 refers to a NaCl (sodium chloride) aqueous solution or a KCl (potassium chloride) aqueous solution in the present example.

"Clarifier" shown in Fig. 7 refers to the sedimentation and separation tank 112 shown in Fig. 1. "Filter" shown in Fig. 7 refers to the filter 114 shown in Fig. 1. Salt water which has passed through the clarifier is introduced into the filter 114. The filter 114 removes a suspended solid (SS) included in the salt water. "Primary salt water" shown in Fig. 7 refers to the salt water which has passed through the filter 114.

"Resin tower" shown in Fig. 7 refers to the resin tower 116 shown in Fig. 1. "Secondary salt water" shown in Fig. 7 refers to the salt water which has passed through the resin tower 116. "Tower cross-sectional area" shown in Fig. 7 is a cross-sectional area of the resin tower 116 in a direction crossing a passage direction of the primary salt water which passes through the resin tower 116.

"Flocculation agent" shown in Fig. 7 is a substance which flocculates an oxidizable organic matter present in water. "Purge of salt water" shown in Fig. 7 means removing $Cl_2$ (chlorine) included in the salt water (liquid 74 (see Fig. 2 and Fig. 3)) led out of the anode chamber 79, and then discarding the salt water in order to reduce a sulfate ion ($SO_4^{2-}$) concentration. The $Cl_2$ (chlorine) included in the salt water may be removed by a dechlorination tower.

The identification unit 14 (see Fig. 5) may identify, from the plurality of predetermined first factors F1, candidates for the one or more first factors F1 for which the production efficiency PE has fallen below the threshold value Tp. The identification unit 14 may identify the candidates for the one or more first factors F1 by determining, for each of the plurality of predetermined first factors F1, whether the factor has caused the production efficiency PE to fall below the threshold value Tp. In the example of Fig. 7, as a result of the first factor F1 in No. 4 being determined as No, "Is pH of electrolysis water within predetermined range?" is identified as a candidate for the first factor F1.

The display unit 62 may display a predetermined first impurity Im1. The display unit 62 may display a plurality of first impurities Im1. In the example of Fig. 7, ten first impurities Im1 numbered from No. 1 to No. 19 are displayed.

SS shown in Fig. 7 refers to a suspended solid. The suspended solid is a fine particle of an insoluble solid with a particle size of 2 mm or less which floats in water. The suspended solid may be a chemical compound of Mg (magnesium), may be a chemical compound of Ca (calcium), may be a chemical compound of Sr (strontium), or may be a chemical compound of Ba (barium).

"$CO_3$ concentration of primary salt water" shown in Fig. 7 refers to a $CO_3^{2-}$ (carbonate ion) concentration of the primary salt water. $Na_2CO_3$ (sodium carbonate) may be charged into the primary salt water in order to remove $Ca^{2+}$ (calcium ion). If the $Na_2CO_3$ (sodium carbonate) is charged into the primary salt water, the $Na_2CO_3$ (sodium carbonate) is easily ionized into $Na^+$ (sodium ion) and $CO_3^{2-}$ (carbonate ion). Accordingly, the primary salt water is likely to include the $CO_3^{2-}$ (carbonate ion).

A TOC shown in Fig. 7 refers to a total organic carbon. The total organic carbon is an index indicating a total amount of the oxidizable organic matter present in water in terms of an amount of carbon.

The identification unit 14 (see Fig. 5) may identify, from the plurality of predetermined first impurities Im1, candidates for the one or more first impurities Im1 which have caused the production efficiency PE to fall below the threshold value Tp. The identification unit 14 may identify the first impurity Im1 for each of the plurality of first factors F1. The identification unit 14 may identify the candidates for the one or more first impurities Im1 by determining, for each of the plurality of predetermined first impurities Im1, whether the impurity has caused the production efficiency PE to fall below the threshold value Tp. In the example of Fig. 7, as a result of the first impurity Im1 in No. 4 being determined as No, the Mg (magnesium), Si (silicon), and Al (aluminum) are identified as candidates for the first impurity Im1. The display unit 62 may display the candidates for the first impurity Im1 in real time.

A measurement value related to the first factor F1 may be automatically acquired, or may be manually input by the input unit 60 (see Fig. 5). The measurement value related to the first factor F1 is, for example, a measurement value of a Ba concentration if the first factor F1 is "Is Ba concentration below predetermined value?" in No. 5. The identification unit 14 (see Fig. 5) may identify the candidate for the first factor F1 based on the measurement value related to the first factor F1 which has been automatically acquired or manually input.

A common first impurity Im1 may correspond to a plurality of different first factors F1. In Fig. 7, for example, the Ca (calcium), the Sr (strontium), the Ba (barium), and the Mg (magnesium) as the common first impurity Im1 correspond to four first factors F1 in No. 8 to 11. If there is a change in a flow rate of at least one of the liquid 70 (see Fig. 3) introduced into the anode chamber 79, the liquid 74 (see Fig. 3) led out of the anode chamber, the liquid 72 (see Fig. 3) introduced into the cathode chamber 98, or the liquid 76 (see Fig. 3) led out of the cathode chamber 98, the same first impurity Im1 may correspond to a different first factor F1.

The liquid 70 (see Fig. 3) flowing through the introduction tube 92 and before being introduced into the anode chamber 79 may include any of the first impurities F1 shown in Fig. 7. The introduction tube 92 may be provided with an ion exchange resin which removes the first impurity F1. The liquid 70 from which the first impurity F1 has been removed by the ion exchange membrane resin may be introduced into the anode chamber 79.

The display unit 62 may display a predetermined first countermeasure Cm1. The display unit 62 may display a plurality of first countermeasures Cm1. In the example of Fig. 7, twenty first countermeasures Cm1 numbered from No. 1 to No. 19 are displayed.

"Regeneration frequency of ion exchange membrane" shown in Fig. 7 refers to a frequency with which a user of the operation support apparatus 100 washes the ion exchange membrane 84. As a result of the ion exchange membrane 84 being washed, the current efficiency CE for when the ion exchange membrane 84 is used is easily recovered.

The identification unit 14 (see Fig. 5) may identify, from the plurality of predetermined first countermeasures Cm1, candidates for the one or more first countermeasures Cm1 for suppressing a decrease in the production efficiency PE and recovering the production efficiency CE. The identification unit 14 may identify the first countermeasure Cm1 for each of the plurality of first factors F1. The identification unit 14 may identify the candidates for the one or more first countermeasures Cm1 by determining, for each of the plurality of predetermined first countermeasures Cm1, whether the countermeasure is for suppressing the decrease in the production efficiency PE and recovering the production efficiency PE. In the example of Fig. 7, as a result of the first countermeasure Cm1 in No. 4 being determined as No, "Adjust pH of electrolysis water within predetermined range" is identified as a candidate for the first countermeasure Cm1. The display unit 62 may display the candidate for the first countermeasure Cm1 in real time.

A plurality of first countermeasures Cm1 may correspond to one first factor F1. In Fig. 7, for example, three first countermeasures Cm1 correspond to one first factor F1 "Is Ca concentration below predetermined value?" in No. 12 to 14.

As described above, in the present example, the identification unit 14 identifies the first impurity Im1 corresponding to the first factor F1, and identifies the first countermeasure Cm1 corresponding to the first factor F1. Accordingly, the user of the operation support apparatus 100 can recognize the first factor F1, and can recognize the first impurity Im1 and the first countermeasure Cm1. If the production efficiency acquisition unit 10 acquires the production efficiency PE in real time, the determination unit 12 determines in real time whether the production efficiency PE is below the threshold value Tp, and the identification unit 14 identifies the first factor F1, the first impurity Im1, and the first countermeasure Cm1 in real time, the user of the operation support apparatus 100 can rapidly take the first countermeasure Cm1 for suppressing the decrease in the production efficiency PE and recovering the production efficiency PE. As a result, a life of the ion exchange membrane 84 (see Fig. 3) is likely to be longer than when the user of the operation support apparatus 100 does not take the first countermeasure Cm1.

The production efficiency PE may be current efficiency of the electrolysis tank 90. The current efficiency is defined as the current efficiency CE. The current efficiency CE refers to a percentage of the amount of production Pr (actual amount of production) to the amount of production Pa (theoretical amount of production). If the production efficiency PE is the current efficiency CE, the threshold value Tp of the production efficiency PE may be a threshold value of the current efficiency CE. The threshold value is defined as a threshold value Te. The determination unit 12 may determine whether the current efficiency CE is below the threshold value Te.

The production efficiency acquisition unit 10 may acquire the current efficiency CE in real time. The determination unit 12 may determine in real time whether the current efficiency CE is below the threshold value Te. The identification unit 14 may identify, as the first factor F1, a factor for which the current efficiency CE has fallen below the threshold value Te. The identification unit 14 may identify, as the first countermeasure Cm, a countermeasure for suppressing a decrease in the current efficiency CE and recovering the current efficiency CE.

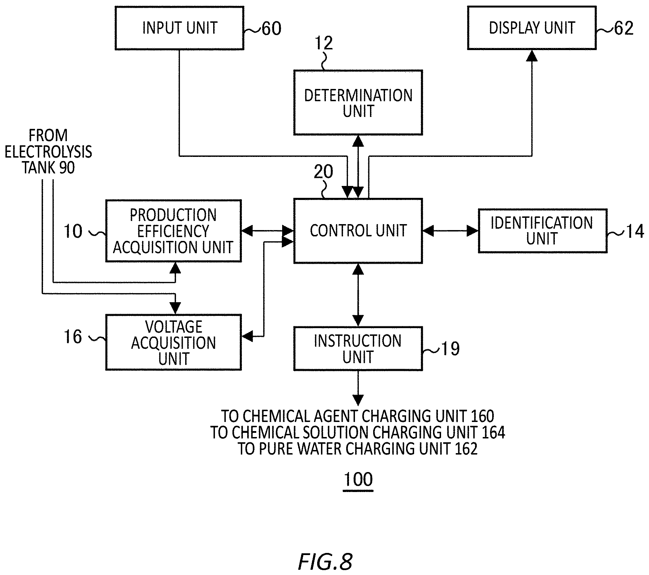

Fig. 8 shows another example of a block diagram of the operation support apparatus 100 according to one embodiment of the present invention. The operation support apparatus 100 of the present example is different from the operation support apparatus 100 shown in Fig. 5 in that it further includes a voltage acquisition unit 16. The voltage acquisition unit 16 acquires voltage to be supplied to the electrolysis tank 90 (see Fig. 2). The voltage is defined as the voltage CV.

When determining that the current efficiency CE is equal to or greater than the threshold value Te, the determination unit 12 may further determine whether the voltage CV is above the predetermined voltage threshold value. The voltage threshold value is defined as the threshold value Tv. The voltage CV at a time point where use of the ion exchange membrane 84 was started is defined as voltage CVs. The voltage CV after the time T has elapsed since the time point where the use of the ion exchange membrane 84 was started is defined as voltage CVe.

As described above, while the electrolysis tank 90 (see Fig. 2) is working, as a result of substances included in the liquid 73 and the liquid 75 (see Fig. 3) accumulating on the ion exchange membrane 84 (see Fig. 3), ion exchange performance of the ion exchange membrane 84 may decrease. Accordingly, if a predetermined amount of production of the product P is maintained, the voltage CVe is likely to be higher than the voltage CVs.

The fact that the voltage CV is above the threshold value Tv may mean that a percentage of the voltage CVe to the voltage CVs is above a predetermined percentage. The predetermined percentage is, for example, 50 mV. The time T is, for example, one year.

The voltage CV may by continuously acquired while the electrolysis tank 90 is working. The voltage CV may be an average value or a median value of voltages CV acquired over the predetermined time t. The time t is, for example, 12 hours, as described above.

The threshold value Tv may change with working time of the electrolysis tank 90 (see Fig. 2). For example, the percentage of the voltage CV after two years have elapsed since the time point where the use of the ion exchange membrane 84 (see Fig. 3) was started, to the voltage CV after one year has elapsed may be different from the percentage of the voltage CVe to the voltage CVs, and may be greater than the percentage of the voltage CVe to the voltage CVs. The threshold value Te may be set based on an ion exchange property of the ion exchange membrane 84. The ion exchange property of the ion exchange membrane 84 may refer to the ion exchange performance of the ion exchange membrane 84.

If it is determined by the determination unit 12 that the voltage CV is above the threshold value Tv, the identification unit 14 may identify a second factor for which the voltage CV has gone above the threshold value Tv. The second factor is defined as a second factor F2. The identification unit 14 may identify, from a plurality of predetermined second factors F2, one or more second factors F2 which have probably caused the voltage CV to go above the threshold value Tv. The one or more second factors F2 may be candidates for the second factor F2. The display unit 62 may display the one or more second factors F2 identified by the identification unit 14. At least some of the second factors F2 may be in common with at least some of the first factors F1.

The voltage acquisition unit 16 may continuously acquire the voltage CV. The voltage acquisition unit 16 may acquire in real time the voltage CV for while the electrolysis tank 90 is working. The determination unit 12 may continuously determine whether the voltage CV is above the threshold value Tv. The determination unit 12 may determine in real time whether the voltage CV is above the threshold value Tv while the electrolysis tank 90 is working. The identification unit 14 may continuously identify the second factor F2 for which the voltage CV has gone above the threshold value Tv. The identification unit 14 may identify the second factor F2 in real time while the electrolysis tank 90 is working. The display unit 62 may display the second factor F2 in real time.

As described above, in the operation support apparatus 100 of the present example, the identification unit 14 identifies the second factor F2 for which the voltage CV of the electrolysis tank 90 has gone above the threshold value Tv. Accordingly, a user of the operation support apparatus 100 can recognize the second factor F2.

The identification unit 14 may identify a second impurity in the electrolysis tank 90 (see Fig. 2). The second impurity is defined as the second impurity Im2. The second impurity Im2 corresponds to the second factor F2. The second impurity Im2 may cause the voltage CV to go above the threshold value Tv. The identification unit 14 may identify the type of the second impurity Im2. The type of the second impurity Im2 may be the type of substance or the type of element for the second impurity Im2.

The identification unit 14 may identify, from a plurality of predetermined second impurities Im2, one or more second impurities Im2 which have probably caused the voltage CV to go above the threshold value Tv. The second impurities Im2 may be candidates for the second impurity Im2. The identification unit 14 may identify the plurality of second impurities Im2 respectively corresponding to the plurality of second factors F2.

The identification unit 14 may identify the second countermeasure for suppressing an increase in the voltage CV and recovering the voltage CV. The second countermeasure is defined as the second countermeasure Cm2. Note that recovering the voltage CV means decreasing the voltage CV. The second countermeasure Cm2 may correspond to the second factor. The identification unit 14 may identify, from a plurality of predetermined second countermeasures Cm2, one or more second countermeasures Cm2 respectively corresponding to the one or more second factors F2. The second countermeasures Cm2 may be candidates for the second countermeasure Cm2. The identification unit 14 may identify the second impurity Im2, and identify the second countermeasure Cm2. The identification unit 14 may identify the second factor F2, the second impurity Im2, and the second countermeasure Cm2 in real time. This allows the user of the operation support apparatus 100 to take the second countermeasure Cm2 without stopping the electrolysis tank 90 which is working.

The determination unit 12 may calculate an electric power consumption rate of the electrolysis tank 90 based on at least one of the current efficiency CE or the voltage CV. The electric power consumption rate is defined as an electric power consumption rate Pu. The electric power consumption rate Pu refers to electric power required for the electrolysis tank 90 to produce a unit amount of the product P. The electric power consumption rate may be calculated by using predetermined converted voltage. The converted voltage may be predetermined based on current flowing as a result of the voltage CV being supplied and on temperatures of the liquid 73 and the liquid 75 (see Fig. 3). The converted voltage is, for example, 6 kA/m$^2$ under a condition that the temperature is 90 degrees C. The production efficiency PE may be the electric power consumption rate Pu.

The determination unit 12 may determine whether the electric power consumption rate Pu is equal to or greater than a predetermined electric power consumption rate threshold value. The electric power consumption rate threshold value is defined as a threshold value Tpu. The threshold value Tpu may be set based on the ion exchange property of the ion exchange membrane 84. The electric power consumption rate Pu at the time point where the use of the ion exchange membrane 84 was started is defined as an electric power consumption rate Pus. The electric power consumption rate Pu after the time T has elapsed since the time point where the use of the ion exchange membrane 84 was started is defined as an electric power consumption rate Pue.

The electric power consumption rate Pue is likely to be higher than the electric power consumption rate Pus as the ion exchange performance of the ion exchange membrane 84 decreases. The fact that the electric power consumption rate Pu is equal to or greater than the threshold value Tpu may mean that a percentage of the electric power consumption rate Pue to the electric power consumption rate Pus is above a predetermined percentage. The predetermined percentage is, for example, 1%. The time T is, for example, one year.

The electric power consumption rate Pu may be continuously calculated while the electrolysis tank 90 is working. The electric power consumption rate Pu may be an average value or a median value of electric power consumption rates Pu acquired over the predetermined time t. The time t is, for example, 12 hours, as described above.

If it is determined by the determination unit 12 that the electric power consumption rate Pu of the electrolysis tank 90 is equal to or greater than the threshold value Tpu, the identification unit 14 may identify the first factor F1 or the second factor F2.

The instruction unit 19 may instruct the electrolysis tank 90 to take at least one of the first countermeasure Cm1 or the second countermeasure Cm2. The instruction to take at least one of the first countermeasure Cm1 or the second countermeasure Cm2 may be given by the user of the operation support apparatus 100, or may be given by the instruction unit 19.

If the detection unit 99 (see Fig. 3) detects the object to be detected Db in the liquid 70, the instruction unit 19 may instruct the chemical agent charging unit 160 (see Fig. 1) to charge the chemical agent 111 into the reaction tank 115. As a result, the first impurity Im1 or the second impurity Im2 is solidified in the reaction tank 115. As a result, the first impurity Im1 or the second impurity Im2 which is solidified precipitates in the sedimentation and separation tank 112.

If the detection unit 99 detects the object to be detected Db in the liquid 70 (see Fig. 3), the first impurity Im1 or the second impurity Im2 is probably introduced into the electrolysis tank 90 after passing through the filter 114 and the resin tower 116. That is, an equivalent amount of the chemical agent 111 is probably less than an equivalent amount of alkali earth metal included in the raw salt 110. As a result of the chemical agent 111 being charged into the reaction tank 115, the equivalent amount of the chemical agent 111 may be approximated to the equivalent amount of the alkali earth metal included in the raw salt 110.

If the impurity sensor 117 (see Fig. 1) detects an ion of alkali earth metal, the instruction unit 19 may instruct the pure water charging unit 162 (see Fig. 1) to charge the pure water 163 into the resin tower 116. If the impurity sensor 117 detects the ion of alkali earth metal, the ion of alkali earth metal is probably introduced into the electrolysis tank 90. The ion of alkali earth metal is, for example, at least one of a calcium ion ($Ca^{2+}$), a magnesium ion ($Mg^{2+}$), a strontium ion ($Sr^{2+}$), or a barium ion ($Ba^{2+}$).

If the impurity sensor 117 (see Fig. 1) detects the ion of alkali earth metal, the instruction unit 19 may instruct the electrolytic apparatus 200 (see Fig. 2) to stop the electrolysis tank 90 to work. As a result, the electrolysis tank 90 becomes hardly affected by the ion of alkali earth metal. After giving the instruction to stop the electrolysis tank 90 to work, the instruction unit 19 may give an instruction to allow water or the like to flow through at least one of the anode chamber 79 or the cathode chamber 98 for a purpose of removing the first impurity Im1 or the second impurity Im2 attached to the ion exchange membrane 84.

The instruction unit 19 may instruct the pure water charging unit 162 to charge the pure water 163 such that the pure water 163 flows in a direction opposite to a direction in which the liquid 70 flows. The instruction refers to so-called back washing of the resin tower 116.

The determination unit 12 (see Fig. 5) may determine whether a back washing speed of the ion exchange resin 118 is above a predetermined back washing speed threshold value. As more suspended matters or organic matters accumulate on the ion exchange resin 118, the back washing speed of the ion exchange resin 118 easily increases. The predetermined back washing speed threshold value may be a back washing speed at which performance of the ion exchange resin 118 to remove the first impurity Im or the second impurity Im2 is equal to or greater than predetermined performance.

The flow rate sensor 119 (see Fig. 1) measures a flow rate of the pure water 163. The determination unit 12 (see Fig. 5) may calculate the back washing speed of the ion exchange resin 118 based on the flow rate of the pure water 163 measured by the flow rate sensor 119. The determination unit 12 may determine whether the calculated back washing speed is above the predetermined back washing speed threshold value.

If it is determined by the determination unit 12 that the back washing speed is above the predetermined back washing speed threshold value, the instruction unit 19 may instruct the pure water charging unit 162 to charge the pure water 163. As a result of the pure water 163 being charged into the pure water charging unit 162, the ion exchange resin 118 may be updated. Updating the ion exchange resin 118 may mean removing, by the pure water 163, the first impurity Im1 or the second impurity Im2 accumulated on the ion exchange resin 118.

The image sensor 120 may measure a resin height of the resin tower 116. The determination unit 12 (see Fig. 5) may determine whether the resin height measured by the image sensor 120 is above a predetermined resin height threshold value. If it is determined by the determination unit 12 that the resin height is above the predetermined resin height threshold value, the instruction unit 19 may instruct the chemical solution charging unit 164 (see Fig. 1) to charge the chemical solution 165 into the resin tower 116. The chemical solution 165 is, for example, HCl (hydrochloric acid) or NaOH (sodium hydroxide). If the resin height is above the resin height threshold value, the first impurity Im1 or the second impurity Im2 is probably introduced into the electrolysis tank 90. As a result of the chemical solution 165 being charged into the resin tower 116, the resin tower 116 is regenerated.

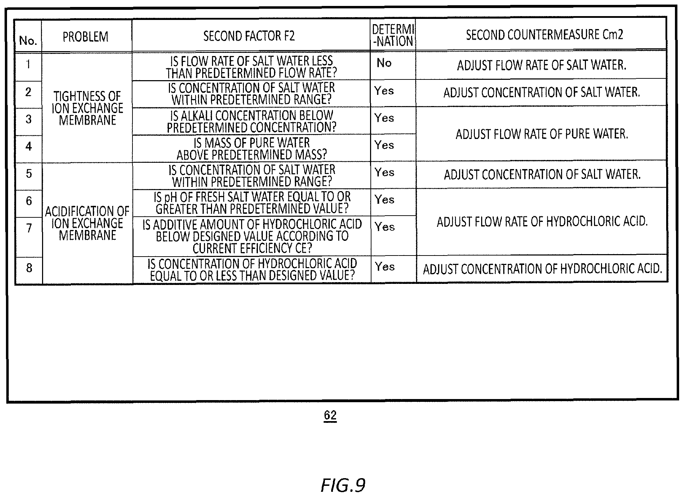

Fig. 9 shows another example of a display mode in the display unit 62. The display unit 62 may display the second factor F2 and the second countermeasure Cm2. The display unit 62 may display the plurality of second countermeasures Cm2 respectively corresponding to the plurality of second factors F2. The display unit 62 may display, for each of the second factors F2, the second countermeasure Cm2 corresponding to the second factor F2.

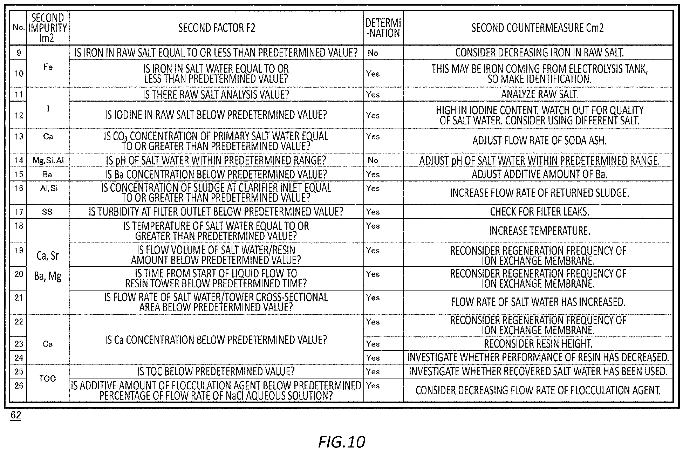

Fig. 10 shows another example of a display mode in the display unit 62. The display unit 62 may display the second factor F2, the second impurity Im2, and the second countermeasure Cm2. The display unit 62 may display the plurality of second impurities Im2 and the plurality of second countermeasures Cm2 respectively corresponding to the plurality of second factors F2. The display unit 62 may display, for each of the second factors F2, the second impurity Im2 and the second countermeasure Cm2 corresponding to the second factor F2.

The display unit 62 may display a predetermined second factor F2. The display unit 62 may display a plurality of second factors F2. In the example of Fig. 9, eight second factors F2 numbered from No. 1 to No. 8 are displayed, and in the example of Fig. 10, sixteen second factors F2 numbered from No. 9 to No. 26 are displayed. The display unit 62 may emphatically display the second factor F2, the second impurity Im2, and the second countermeasure Cm2 identified by the identification unit 14 among the predetermined second factors F2, second impurities Im2, and second countermeasures Cm2. Emphatically displaying means, for example, displaying the second factor F2 or the like identified by the identification unit 14 in a color different from when displaying another second factor F2, for example.

"Acidification of ion exchange membrane" shown in Fig. 9 refers to attachment of $H^+$ (hydrogen ion) to the anionic group 86 (see Fig. 4) of the ion exchange membrane 84. In order to adjust pH of the liquid 73 (see Fig. 3 and Fig. 4), HCl (hydrochloric acid) or alkaline salt water may be charged into the anode chamber 79. The alkaline salt water is, for example, salt water in which NaOH (sodium hydroxide) is dissolved. If the HCl (hydrochloric acid) is charged into the anode chamber 79, the $H^+$ (hydrogen ion) may attach to the anionic group 86. "Fresh salt water" shown in Fig. 9 refers to the salt water (liquid 74 (see Fig. 3)) led out of the electrolysis tank 90.

"Tightness of ion exchange membrane" shown in Fig. 9 refers to ratio of $H_2O$ (water) included in the ion exchange membrane 84 (see Fig. 3). If an $H^+$ (hydrogen ion) concentration of the liquid 73 increases or an alkali ion concentration of the liquid 75 increases, the ratio of the $H_2O$ (water) included in the ion exchange membrane 84 may decrease. When the ratio of the $H_2O$ (water) included in the ion exchange membrane 84 decreases, the tightness of the ion exchange membrane 84 increases.

At least some of the second factors F2 may be in common with at least some of the first factors F1. In the present example, the second factors F2 in No. 9 to No. 24 are in common with the first factors F1 in No. 1 to No. 16 (see Fig. 7).

The identification unit 14 (see Fig. 8) may identify, from the plurality of predetermined second factors F2, candidates for the one or more second factors F2 for which the voltage CV has gone above the threshold value Tv. The identification unit 14 may identify the candidates for the one or more second factors F2 by determining, for each of the plurality of predetermined second factors F2, whether the factor has caused the voltage CV to go above the threshold value Tv. In the example of Fig. 10, as a result of the second factors F2 in No. 9 and No. 14 being determined as No, "Is iron in raw salt 5ppm or more?" and "Is pH of electrolysis water within predetermined range?" are identified as candidates for the second factor F2.

The display unit 62 may display a predetermined second impurity Im2. The display unit 62 may display a plurality of second impurities Im2. In the example of Fig. 10, ten second impurities Im2 numbered from No. 9 to No. 26 are displayed.

At least some of the second impurities Im2 may be in common with at least some of the first impurities Im1. In the present example, the second impurities Im2 in No. 9 to No. 26 are in common with the first impurities Im1 in No. 1 to No. 16 (see Fig. 7).

The identification unit 14 (see Fig. 8) may identify, from the plurality of predetermined second impurities Im2, candidates for the one or more second impurities Im2 which have caused the voltage CV to go above the threshold value Tv. The identification unit 14 may identify the second impurity Im2 for each of the plurality of second factors F2. The identification unit 14 may identify the candidates for the one or more second impurities Im2 by determining, for each of the plurality of predetermined second impurities Im2, whether the impurity has caused the voltage CV to go above the threshold value Tv. In the example of Fig. 10, as a result of the second impurities Im2 in No. 9 and No. 14 being determined as No, Fe (iron) as well as Mg (magnesium), Si (silicon), and Al (aluminum) are identified as candidates for the second impurity Im2. The display unit 62 may display the candidates for the second impurity Im2 in real time.

A measurement value related to the second factor F2 may be automatically acquired, or may be manually input by the input unit 60 (see Fig. 8). The measurement value related to the second factor F2 is, for example, a measurement value of a concentration of the salt water if the second factor F2 is "Is concentration of salt water equal to or greater than predetermined value?" in No. 18. The identification unit 14 (see Fig. 8) may identify a candidate for the second factor F2 based on the measurement value related to the second factor F2 which has been automatically acquired or manually input.

A common second impurity Im2 may correspond to a plurality of different second factors F2. In Fig. 10, for example, Fe as the common second impurity Im2 corresponds to two second factors F2 in No. 9 and No. 10. If there is a change in a flow rate of at least one of the liquid 70 (see Fig. 3) introduced into the anode chamber 79, the liquid 74 (see Fig. 3) led out of the anode chamber, the liquid 72 (see Fig. 3) introduced into the cathode chamber 98, or the liquid 76 (see Fig. 3) led out of the cathode chamber 98, the same second impurity Im2 may correspond to a different second factor F2.

The liquid 70 (see Fig. 3) flowing through the introduction tube 92 and before being introduced into the anode chamber 79 may include any of the second impurities F2 shown in Fig. 10. The liquid 70 from which the second impurity F2 has been removed by the ion exchange membrane resin provided in the introduction tube 92 may be introduced into the anode chamber 79.

The display unit 62 may display a predetermined second countermeasure Cm2. The display unit 62 may display a plurality of second countermeasures Cm2. In the example of Fig. 9, eight second countermeasures Cm2 numbered from No. 1 to No. 8 are displayed, and in the example of Fig. 10, eighteen second countermeasures Cm2 numbered from No. 9 to No. 26 are displayed.

At least some of the second countermeasures Cm2 may be in common with at least some of the first countermeasures Cm1. In the present example, the second countermeasures Cm2 in No. 11 to No. 26 are in common with the first countermeasures Cm1 in No. 1 to No. 16 (see Fig. 7).

The identification unit 14 (see Fig. 8) may identify, from the plurality of predetermined second countermeasures Cm2, candidates for the one or more second countermeasures Cm2 for suppressing an increase in the voltage CV and recovering the voltage CV. The identification unit 14 may identify the second countermeasure Cm2 for each of the plurality of second factors F2. The identification unit 14 may identify the candidates for the one or more second countermeasures Cm2 by determining, for each of the plurality of predetermined second countermeasures Cm2, whether the countermeasure is for suppressing the increase in the voltage CV and recovering the voltage C. In the example of Fig. 9, as a result of the second countermeasure Cm2 in No. 1 being determined as No, "Adjust flow rate of salt water" is identified as a candidate for the second countermeasure Cm2. In the example of Fig. 10, as a result of the second countermeasures Cm2 in No. 9 and No. 14 being determined as No, "Consider reducing iron in raw salt" and "Adjust pH of electrolysis water within predetermined range" are identified as candidates for the second countermeasure Cm2. The display unit 62 may display the candidate for the second countermeasure Cm2 in real time.

A plurality of second countermeasures Cm2 may correspond to one second factor F2. In Fig. 10, for example, three second countermeasures Cm2 correspond to one second factor F2 in No. 17 to 19.

As described above, in the present example, the identification unit 14 identifies the second impurity Im2 corresponding to the second factor F2, and identifies the second countermeasure Cm2 corresponding to the second factor F2. Accordingly, a user of the operation support apparatus 100 can recognize the second factor F2, and can recognize the second impurity Im2 and the second countermeasure Cm2. If the voltage acquisition unit 16 acquires the voltage CV in real time, the determination unit 12 determines in real time whether the voltage CV is above the threshold value Tv, and the identification unit 14 identifies the second factor F2, the second impurity Im2, and the second countermeasure Cm2 in real time, the user of the operation support apparatus 100 can rapidly take the second countermeasure Cm2 for suppressing the increase in the voltage CV and recovering the voltage CV. As a result, a life of the ion exchange membrane 84 (see Fig. 3) is likely to be longer than when the user of the operation support apparatus 100 does not take the second countermeasure Cm2.

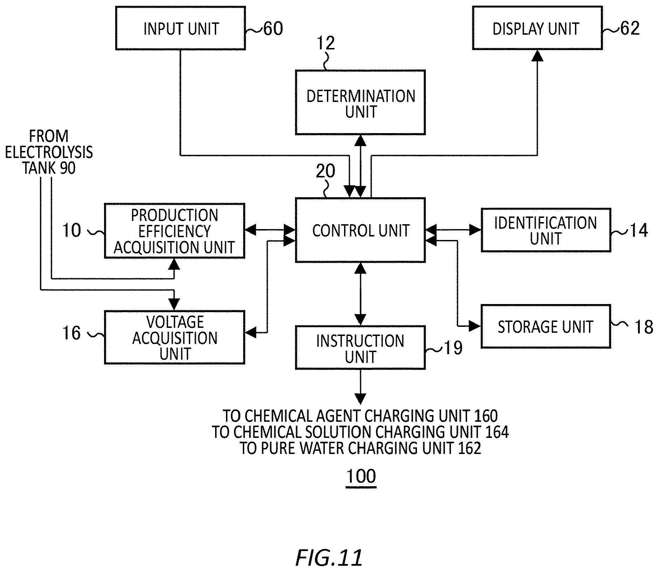

Fig. 11 shows another example of a block diagram of the operation support apparatus 100 according to one embodiment of the present invention. The operation support apparatus 100 of the present example is different from the operation support apparatus 100 shown in Fig. 8 in that it further includes a storage unit 18.

The storage unit 18 may store the first factor F1, the first impurity Im1, and the first countermeasure Cm1. The storage unit 18 may associate and store one first factor F1 shown in Fig. 7, the first impurity Im1 corresponding to the one first factor F1, and the first countermeasure Cm1 corresponding to the one first factor F1.

The storage unit 18 may store the second factor F2, the second impurity Im2, and the second countermeasure Cm2. The storage unit 18 may associate and store one second factor F2 shown in Fig. 9 and the second countermeasure Cm2 corresponding to the one second factor F2. The storage unit 18 may associate and store one second factor F2 shown in Fig. 10, the second impurity Im2 corresponding to the one second factor F2, and the second countermeasure Cm2 corresponding to the one second factor F2.

Note that the operation support apparatus 100 may not include the storage unit 18. The operation support apparatus 100 may store the first factor F1, the first impurity Im1, and the first countermeasure Cm1 in a cloud server, and may store the second factor F2, the second impurity Im2, and the second countermeasure Cm2.

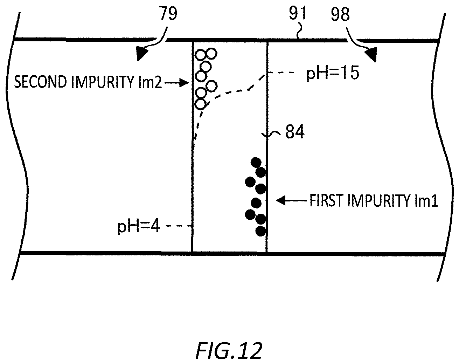

Fig. 12 is a schematic view showing the first impurity Im1 and the second impurity Im2 which are attached to the ion exchange membrane 84. Fig. 12 also shows a change in pH from a surface in contact with the anode chamber 79 to a surface in contact with the cathode chamber 98, in the ion exchange membrane 84. The first impurity Im1 easily attaches to the surface in contact with the cathode chamber 98, in the ion exchange membrane 84. The second impurity Im2 easily attaches to the surface in contact with the anode chamber 79, in the ion exchange membrane 84. Some of multiple types of first impurities Im1 may be in common with some of multiple types of second impurities Im2. In the examples of Fig. 7 and Fig. 10, the first impurities Im1 in No. 1 to No. 16 are in common with the second impurities Im2 in No. 11 to No. 26.

Based on the first factor F1, the first impurity Im1, and the first countermeasure Cm1 stored in the storage unit 18, the identification unit 14 may identify the first impurity Im1 corresponding to the first factor F1, and identify the first countermeasure Cm1 corresponding to the first factor F1. Based on the second factor F2, the second impurity Im2, and the second countermeasure Cm2 stored in the storage unit 18, the identification unit 14 may identify the second impurity Im2 corresponding to the second factor F2, and identify the second countermeasure Cm2 corresponding to the second factor F2. As a result of the storage unit 18 associating and storing the first factor F1, the first impurity Im1, and the first countermeasure Cm1 as well as associating and storing the second factor F2, the second impurity Im2, and the second countermeasure Cm2, even if some of multiple types of first impurities Im1 are in common with some of multiple types of second impurities Im2, the identification unit 14 can identify the first impurity Im1 corresponding to the first factor F1 and identify the first countermeasure Cm1 corresponding to the first factor F1, and can identify the second impurity Im2 corresponding to the second factor F2 and identify the second countermeasure Cm2 corresponding to the second factor F2.

As shown in Fig. 7, one first impurity Im1 may correspond to a plurality of first factors F1, and a plurality of first countermeasures Cm1 may correspond to one first factor F1. Accordingly, as a result of the identification unit 14 identifying the first impurity Im1 corresponding to the first factor F1 and identifying the first countermeasure Cm1 corresponding to the first factor F1 based on the first factor F1, the first impurity Im1, and the first countermeasure Cm1 stored in the storage unit 18, the identification unit 14 can identify the first impurity Im1 for each of the first factors F1, and can identify the first countermeasure Cm1 for each of the first factors F1.

As shown in Fig. 10, one second impurity Im2 may correspond to a plurality of second factors F2, and a plurality of second countermeasures Cm2 may correspond to one second factor F2. Accordingly, as a result of the identification unit 14 identifying the second impurity Im2 corresponding to the second factor F2 and identifying the second countermeasure Cm2 corresponding to the second factor F2 based on the second factor F2, the second impurity Im2, and the second countermeasure Cm2 stored in the storage unit 18, the identification unit 14 can identify the second impurity Im2 for each of the second factors F2, and can identify the second countermeasure Cm2 for each of the second factors F2.

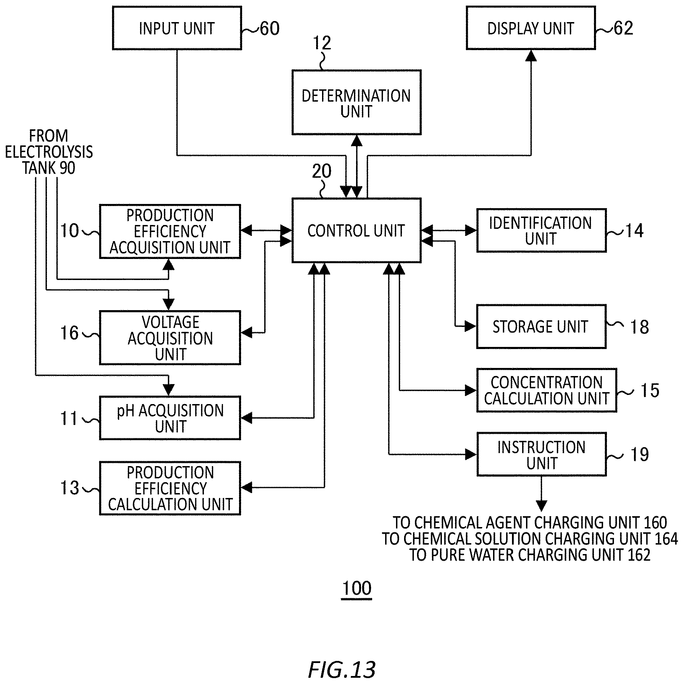

Fig. 13 shows another example of a block diagram of the operation support apparatus 100 according to one embodiment of the present invention. The operation support apparatus 100 of the present example is different from the operation support apparatus 100 shown in Fig. 11 in that it further includes a pH acquisition unit 11, a production efficiency calculation unit 13, and a concentration calculation unit 15.

The pH acquisition unit 11 acquires pH of a NaCl (sodium chloride) aqueous solution or a KCl (potassium chloride) aqueous solution introduced into the anode chamber 79 (see Fig. 3). The pH acquisition unit 11 may acquire pH of a NaOH (sodium hydroxide) aqueous solution or a KOH (potassium hydroxide) aqueous solution introduced into the cathode chamber 98 (see Fig. 3).

The production efficiency calculation unit 13 calculates the current efficiency CE of the electrolysis tank 90 (see Fig. 2). The production efficiency calculation unit 13 may calculate the current efficiency CE of each of the plurality of electrolysis cells 91 (see Fig. 2). The production efficiency calculation unit 13 may calculate the current efficiency CE of the electrolysis tank 90 based on the pH of the NaCl (sodium chloride) aqueous solution or the KCl (potassium chloride) aqueous solution acquired by the pH acquisition unit 11.

The production efficiency calculation unit 13 may calculate the current efficiency CE (%) based on Expression 1 described below. Expression 1 described below is for when calculating the current efficiency CE related to NaOH (sodium hydroxide). The current efficiency CE related to the NaOH (sodium hydroxide) may refer to so-called caustic soda current efficiency.

(Expression 1)

$$\text{CE} = 100 - \left( CE_{HCl} + CE_{O_2} + CE_{HClO} + CE_{ClO_3} \right) \ [\%] \tag{1}$$

$CE_{HCl}$, $CE_{O2}$, $CE_{HClO}$, $CE_{ClO2}$ in Expression 1 are respectively expressed by Expression 2 to Expression 5 described below.

(Expression 2)

$$CE_{HCl} = \frac{F_{HCl} - (Qi \times COHi) - (Qo \times CHo)}{I \times 0.03731} \times 100 \ [\%] \tag{2-1}$$

$$COHi = a1 \times pH - b1 \tag{2-2}$$

$$CHo = \left( a2 \times C_{SO_4} - b2 \right) \times 10^{-pH} \tag{2-3}$$

(Expression 3)

$$CE_{O_2} = 2 \times \frac{O_2}{Cl_2} \times 100 \ [\%] \tag{3-1}$$

$$\frac{O_2}{Cl_2} = (a3 \times 10^{pH-4} + b3) \times \frac{A}{I} \tag{3-2}$$

(Expression 4)

$$CE_{HClO} = \frac{CHClO \times Q_0}{M1 \times I \times 0.03731} \times 100 \ [\%] \tag{4-1}$$

$$CHClO = D \times 10^{pH-e} \ [g/L] \tag{4-2}$$

$$D = (a4 \times T + b4) \times P + (c \times T) + d \tag{4-3}$$

(Expression 5)

$$CE_{ClO_3} = \frac{6 \times \Delta NaClO_3 \times Q_0}{M2 \times I \times 0.03731} \times 100 \ [\%] \tag{5-1}$$

$$\Delta NaClO_3 = a5 \times 10^{pH-4} + b5 \ [g/L] \tag{5-2}$$

The production efficiency calculation unit 13 may calculate a speed $J_{NaOH}$ (mol/h) at which the NaOH (sodium hydroxide) flows into the anode chamber 79, based on Expression 6-1 to Expression 6-5 described below. Units of J' and J" are also mol/h. The current efficiency CE (%) related to the NaOH (sodium hydroxide) may be calculated according to Expression 6-6 described below.

(Expression 6)

$$J_{NaOH} = J'_{HCl} + 4J_{O_2} + J''_{HClO} + 2J''_{NaClO} + 6J''_{NaClO_3} \tag{6-1}$$

$$J'_{HCl} = F_{HCl} - (Qi \times COHi) - (Qo \times CHo) \tag{6-2}$$

$$J'_{HClO} = CHClO \times Q_0 \tag{6-3}$$

$$J''_{NaClO} = CNaClO \times Q_0 \tag{6-4}$$

$$J''_{NaClO_3} = \Delta NaClO_3 \times Q_0 \tag{6-5}$$

$$CE = 1 - (F/I) \times J_{NaOH} \tag{6-6}$$

Here, I is current (A), and F is 26.8 (Ah/mol electrons). $J_{O_2}$ in Expression 6-1 is calculated by multiplying an amount of production of $Cl_2$ (chlorine) gas (gas 77) by an $O_2$ (oxygen) concentration of the $Cl_2$ (chlorine) gas. CNaClO in Expression 6-4 is calculated by measuring a NaClO concentration of the liquid 74 (aqueous solution of alkali metal chloride) at an outlet of the anode chamber 79.

$F_{HCl}$ in Expression 2 is a flow rate of HCl (hydrochloric acid) introduced into the electrolysis tank 90 per unit time. Qi in Expression 2 is a flow rate of salt water introduced into the electrolysis tank 90 per unit time. The flow rate Qi may be a flow rate of the salt water passing through the introduction tube 92 (see Fig. 3) per unit time. Qo in Expression 2, Expression 4, and Expression 5 is a flow rate of the salt water introduced from the electrolysis tank 90 per unit time. The flow rate Qo may be a flow rate of the salt water passing through the lead-out tube 94 (see Fig. 3) per unit time.

COHi in Expression 2 is an alkali concentration of the salt water introduced into the electrolysis tank 90. The alkali concentration of the salt water may be a concentration of OH⁻(hydroxide ion) of the salt water. The alkali concentration COHi may be the alkali concentration of the salt water passing through the introduction tube 92 (see Fig. 3). CHo in Expression 2 is an acid concentration of the salt water led out of the electrolysis tank 90. The acid concentration of the salt water may be a concentration of H⁺ (hydrogen ion) of the salt water. The acid concentration CHo may be the acid concentration of the salt water passing through the lead-out tube 94 (see Fig. 3).

I in Expression 2 to Expression 5 is current flowing through the electrolysis tank 90. The current I flows as a result of the voltage CV being supplied to the anode 80, the cathode 82, the ion exchange membrane 84, the liquid 73, and the liquid 75 (see Fig. 3). A in Expression 3 is area over which the current I flowing through the electrolysis tank 90 passes. The area A may be whichever smaller of area over which the anode 80 is in contact with the liquid 73 (see Fig. 3) and area over which the cathode 82 is in contact with the liquid 75 (see Fig. 3).

$C_{SO4}$ in Expression 2 is a concentration of $SO_4^{2-}$ (sulfate ion) of the salt water. T in Expression 4 is temperature of the salt water (liquid 73) in the anode chamber 79. Pin Expression 4 is pressure of the $Cl_2$ (chlorine) gas in the anode chamber 79. M1 in Expression 4 is molecular weight of HClO (hypochlorous acid). M2 in Expression 5 is molecular weight of $NaClO_3$ (sodium chlorate). pH in Expression 2 to Expression 5 may be acquired by the pH acquisition unit 11.

Coefficients a1 and b1 in Expression 2 may be calculated according to a regression expression. Coefficients a2 and b2 in Expression 2 may be calculated according to a regression expression. The HCl (hydrochloric acid) introduced into the electrolysis tank 90 may be consumed by the $CO_3^{2-}$ (carbonate ion) and the $OH^-$ (hydroxide ion) included in the salt water. The alkali concentration COHi may be calculated based on an $OH^-$ (hydroxide ion) concentration and a $CO_3^{2-}$ (carbonate ion) concentration of the salt water.

Coefficients a3 and b3 in Expression 3 may be calculated according to a regression expression. Coefficients a4, b4, c, d, and e in Expression 4 may be calculated according to a regression expression. CHClO in Expression 4 may be calculated based on a known expression described in a soda handbook (published by Japan Soda Industry Association) or the like. Coefficients a5 and b5 in Expression 5 may be calculated according to a regression expression.

The production efficiency calculation unit 13 may calculate the current efficiency CE (%) based on Expression 7 described below. Expression 1 described below is for when calculating the current efficiency CE related to $Cl_2$ (chlorine). The current efficiency CE related to the $Cl_2$ (chlorine) may refer to so-called chlorine current efficiency.

(Expression 7)

$$\text{CE} = 100 - \left( CE_{Cl2} + CE_{O_2} + CE_{HClO} + CE_{ClO_3} \right) \ [\%] \tag{7}$$

$CE_{Cl2}, CE_{O2}, CE_{HClO}, CE_{ClO2}$ in Expression 1 are respectively expressed by Expression 2 to Expression 5 described below.

(Expression 8)

$$CE_{Cl2} = \frac{(Qo \times CcL2o)}{I \times 0.03731} \times 100 \ [\%] \tag{8}$$

Ccl2 may be calculated based on a known expression described in the soda handbook or the like.

The production efficiency calculation unit 13 may calculate a speed $J_{Cl2}$ at which the $Cl_2$ (chlorine) is consumed without being recovered as the $Cl_2$ (chlorine) gas, based on Expression 9-1 described below. The units of J' and J" are also mol/h. The current efficiency CE (%) related to the $Cl_2$ (chlorine) may be calculated according to Expression 9-2 described below.

(Expression 9)

$$J_{Cl2} = 4J_{O_2} + 2J''_{Cl2} + 2J''_{HClO} + 2J''_{NaClO} + 6J''_{NaClO_3} \tag{9-1}$$

$$\text{CE} = 1 - (F/I) \times J_{Cl2} \tag{9-2}$$

Here, I is current (A), and F is 26.8 (Ah/mol electrons). $J''_{HClO}$, $J''_{NaClO}$, and $J''_{NaClO3}$ in Expression 9-1 are respectively expressed by Expression 6-3 to Expression 6-5. $J_{O2}$ in Expression 9-1 is calculated by multiplying the amount of production of the $Cl_2$ (chlorine) gas (gas 77) by the $O_2$ (oxygen) concentration of the $Cl_2$ (chlorine) gas. $J'_{Cl2}$ in Expression 9-1 is an amount of the $Cl_2$ (chlorine) gas (gas 77) included in the liquid 74 (aqueous solution of alkali metal chloride) at the outlet of the anode chamber 79. The amount of the $Cl_2$ (chlorine) gas (gas 77) may be calculated based on a known expression described in the soda handbook or the like.

In the present example, the production efficiency acquisition unit 10 acquires the current efficiency CE of the electrolysis tank 90 calculated by the production efficiency calculation unit 13. As a result, the production efficiency acquisition unit 10 can acquire the current efficiency CE of the electrolysis tank 90 based on pH of the NaCl (sodium chloride) aqueous solution or the KOH (potassium chloride) aqueous solution acquired by the pH acquisition unit 11. As a result of the current efficiency CE being acquired based on the pH, the current efficiency CE may be accurately monitored in real time.

The determination unit 12 may calculate an electric power consumption rate $Pu_{NaOH}$ related to the NaOH (sodium hydroxide) according to Expression 10 described below, based on the current efficiency CE and the voltage CV. (Expression 10)

$$Pu_{NaOH} = 670.2 \times \left( {CV}/{CE} \right) \times 100 \tag{10}$$

The determination unit 12 may calculate an electric power consumption rate $Pu_{Cl2}$ related to the $Cl_2$ (chlorine) according to Expression 11 described below, based on the current efficiency CE and the voltage CV. (Expression 11)

$$Pu_{Cl2} = 744.6 \times \left( {CV}/{CE} \right) \times 100 \tag{11}$$

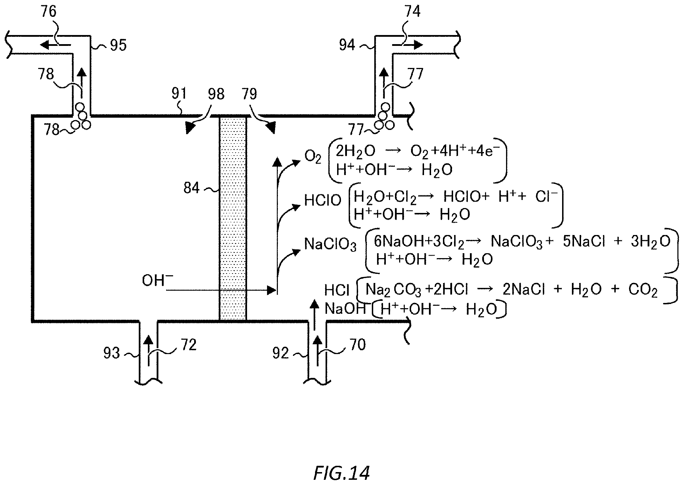

Fig. 14 is a schematic view showing a chemical reaction in the anode chamber 79, of OH⁻ (hydroxide ion) which has passed through the ion exchange membrane 84. In Fig. 14, positions of the anode chamber 79 and the cathode chamber 98 with respect to the ion exchange membrane 84 are shown in an opposite way to those in Fig. 3. In Fig. 14, illustration of the anode 80, the cathode 82, the liquid 73, the liquid 75, the gas 77, and the gas 78 shown in Fig. 3 is omitted.

As described above, while the electrolysis tank 90 (see Fig. 2) is working, as a result of substances included in the liquid 73 and the liquid 75 (see Fig. 3) coming into contact with the ion exchange membrane 84 (see Fig. 3), ion exchange performance of the ion exchange membrane 84 may degrade. If the ion exchange performance degrades, the OH⁻ (hydroxide ion) of the cathode chamber 98 may move to the anode chamber 79 after passing through the ion exchange membrane 84.

If the OH⁻ (hydroxide ion) moves to the anode chamber 79, the OH⁻ (hydroxide ion) chemically reacts with each of $O_2$ (oxygen), HCIO (hypochlorous acid), and $NaClO_3$ (sodium chlorate) in the anode chamber 79. Fig. 14 shows a formula for each chemical reaction.

The concentration calculation unit 15 may calculate an $O_2$ (oxygen) concentration and an HCIO (hypochlorous acid) concentration in the anode chamber 79 based on the pH acquired by the pH acquisition unit 11. The $O_2$ (oxygen) concentration and the HCIO (hypochlorous acid) concentration are respectively defined as a concentration D1 and a concentration D2. The concentration calculation unit 15 may calculate the $O_2$ (oxygen) concentration D1 and the HCIO (hypochlorous acid) concentration D2 respectively according to Expression 3-2 and Expression 4-2 based on the pH acquired by the pH acquisition unit 11.

As described above, in order to adjust pH of the liquid 73 (see Fig. 3 and Fig. 4), HCl (hydrochloric acid) may be charged into the anode chamber 79. In Fig. 14, the HCl (hydrochloric acid) is displayed at an outlet of the introduction tube 92. As described above, $Na_2CO_3$ (sodium carbonate) may be charged into primary salt water. The $Na_2CO_3$ (sodium carbonate) charged into the primary salt water may flow into the anode chamber 79. If the HCl (hydrochloric acid) is charged into the anode chamber 79 and the $Na_2CO_3$ (sodium carbonate) is charged into the primary salt water, $CO_2$ (carbon dioxide) is generated through the chemical reaction shown in Fig. 14 between the HCl (hydrochloric acid) and the $Na_2CO_3$ (sodium carbonate). $NaClO_3$ (sodium chlorate) is also generated through the following chemical reaction shown in Fig. 14.

(Chemical Formula 3)　　　　$6NaOH + 3Cl_2 \rightarrow NaClO_3 + 5NaCl + 3H_2O$

An amount of the $NaClO_3$ (sodium chlorate) generated by Chemical Formula 3 depends on pH of the liquid 75 (see Fig. 3) in the anode chamber 79.

The concentration calculation unit 15 may calculate a $NaClO_3$ (sodium chlorate) concentration in the anode chamber 79 based on the pH acquired by the pH acquisition unit 11. The $NaClO_3$ (sodium chlorate) concentration is defined as a concentration D3. The concentration calculation unit 15 may calculate the $NaClO_3$ (sodium chlorate) concentration D3 according to Expression 5-2 based on the pH acquired by the pH acquisition unit 11.

If the liquid 70 is a NaCl (sodium chloride) aqueous solution, the concentration calculation unit 15 may calculate an H' (hydrogen ion) concentration and an OH⁻ (hydroxide ion) concentration of the NaCl (sodium chloride) aqueous solution introduced into the anode chamber 79. The H' (hydrogen ion) concentration and the OH⁻ (hydroxide ion) concentration are respectively defined as a concentration D4 and a concentration D5. Note that, if the liquid 70 is a KCl (potassium chloride) aqueous solution, the concentration calculation unit 15 may calculate the H' (hydrogen ion) concentration D4 and the OH⁻ (hydroxide ion) concentration D5 of the KCl (potassium chloride) aqueous solution introduced into the anode chamber 79.

As described above, if the ion exchange membrane 84 is acidified, H' (hydrogen ion) may attach to the anionic group 86 (see Fig. 4). The H' (hydrogen ion) may move from the anionic group 86 to the anode chamber 79. The concentration calculation unit 15 may calculate the H' (hydrogen ion) concentration D4 according to Expression 2-3 based on the pH acquired by the pH acquisition unit 11.

As described above, in order to adjust the pH of the liquid 73 (see Fig. 3 and Fig. 4), at least one of the HCl (hydrochloric acid) or NaOH (sodium hydroxide) may be charged into the anode chamber 79. If the NaOH (sodium hydroxide) is charged into the anode chamber 79, the NaOH may flow into the anode chamber 79. The concentration calculation unit 15 may calculate the OH⁻ (hydroxide ion) concentration D5 according to Expression 2-2 based on the pH acquired by the pH acquisition unit 11.

The production efficiency calculation unit 13 may calculate the current efficiency CE of the electrolysis tank 90 based on the concentration D1, the concentration D2, and the concentration D3 calculated by the concentration calculation unit 15 as well as the concentration D4 of the liquid 73 (see Fig. 3) introduced into the anode chamber 79 and the concentration D5 of the liquid 74 led out of the anode chamber 79. The production efficiency calculation unit 13 may calculate the current efficiency CE of the electrolysis tank 90 according to Expression 2-1 based on the concentration D4 and the concentration D5.

The concentration calculation unit 15 may calculate a first relationship between pH of the NaCl (sodium chloride) aqueous solution or the KCl (potassium chloride) aqueous solution and the $O_2$ (oxygen) concentration D1. The first relationship is defined as a first relationship R1. The first relationship R1 may be Expression 3-2 described above. The concentration calculation unit 15 may calculate the coefficients a3 and b3 in Expression 3-2 according to a regression expression.

The concentration calculation unit 15 may calculate a second relationship between the pH of the NaCl (sodium chloride) aqueous solution or the KCl (potassium chloride) aqueous solution and the HClO (hypochlorous acid) concentration D2. The second relationship is defined as a second relationship R2. The second relationship R2 may be Expression 4-2 and Expression 4-3 described above. The concentration calculation unit 15 may calculate the coefficients a4, b4, c, and d in Expression 4-3 as well as the coefficient e in Expression 4-2 according to a regression expression.

The concentration calculation unit 15 may calculate a third relationship between the pH of the NaCl (sodium chloride) aqueous solution or the KCl (potassium chloride) aqueous solution and the $NaClO_3$ (sodium chlorate) concentration. The third relationship is defined as a third relationship R3. The third relationship R3 may be Expression 5-2 described above. The concentration calculation unit 15 may calculate the coefficients as and b5 in Expression 5-2 according to a regression expression.

The concentration calculation unit 15 may calculate a fourth relationship between the pH of the NaCl (sodium chloride) aqueous solution or the KCl (potassium chloride) aqueous solution and the H' (hydrogen ion) concentration. The fourth relationship is defined as a fourth relationship R4. The fourth relationship R4 may be Expression 2-3 described above. The concentration calculation unit 15 may calculate the coefficients a2 and b2 in Expression 2-3 according to a regression expression.

The concentration calculation unit 15 may calculate a fifth relationship between the pH of the NaCl (sodium chloride) aqueous solution or the KCl (potassium chloride) aqueous solution and the OH⁻ (hydroxide ion) concentration. The fifth relationship is defined as a fifth relationship R5. The fifth relationship R5 may be Expression 2-2 described above. The concentration calculation unit 15 may calculate the coefficients a1 and b1 in Expression 2-2 according to a regression expression.

The first relationship R1 to the fifth relationship R5 may be stored in the storage unit 18. The storage unit 18 may store the coefficients a1 to a5, the coefficients b1 to b5, the coefficient c, the coefficient d, and the coefficient e.

The concentration calculation unit 15 may calculate the $O_2$ (oxygen) concentration D1 based on the pH acquired by the pH acquisition unit 11 and on the first relationship R1. The concentration calculation unit 15 may calculate the HClO (hypochlorous acid) concentration D2 based on the pH acquired by the pH acquisition unit 11 and on the second relationship R2. The concentration calculation unit 15 may calculate the $NaClO_3$ (sodium chlorate) concentration based on the pH acquired by the pH acquisition unit 11 and on the third relationship R3. The concentration calculation unit 15 may calculate the H' (hydrogen ion) concentration based on the pH acquired by the pH acquisition unit 11 and on the fourth relationship R4. The concentration calculation unit 15 may calculate the OH⁻ (hydroxide ion) concentration based on the pH acquired by the pH acquisition unit 11 and on the fifth relationship R5.

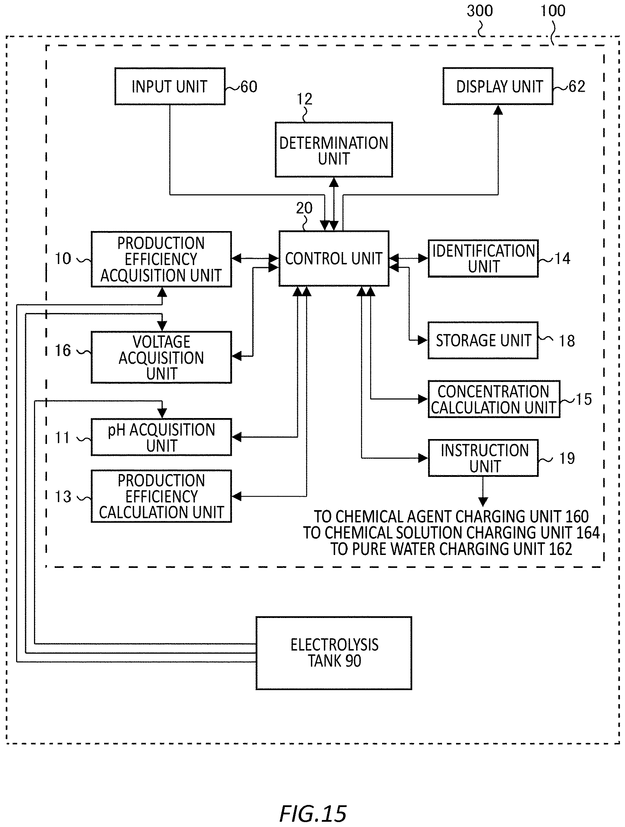

Fig. 15 shows an example of an operation support system 300 according to one embodiment of the present invention. The operation support system 300 includes the operation support apparatus 100 and the electrolysis tank 90. In the present example, the operation support system 300 includes the operation support apparatus 100 shown in Fig. 13 and the electrolysis tank 90. In Fig. 15, a range of the operation support apparatus 100 and a range of the operation support system 300 are respectively indicated by a coarse broken line portion and a fine broken line portion.

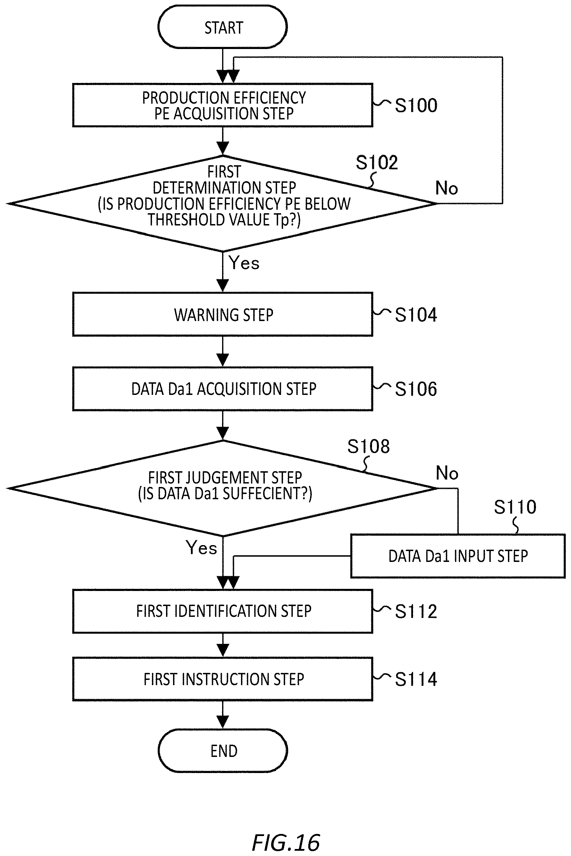

Fig. 16 is an example of a first flowchart including an operation support method according to one embodiment of the present invention. The operation support method according to one embodiment of the present invention supports operation of the electrolysis tank 90 (see Fig. 2). The operation support method according to one embodiment of the present invention includes a production efficiency CE acquisition step S100, a first determination step S102, and a first identification step S112.

In the production efficiency CE acquisition step S100, the production efficiency acquisition unit 10 acquires the production efficiency PE. In the first determination step S102, the determination unit 12 determines whether the production efficiency PE of the electrolysis tank 90 acquired in the production efficiency acquisition step 5100 is below the threshold value Tp. If it is determined that the current efficiency CE is equal to or greater than the threshold value Tp, the operation support method returns to the production efficiency PE acquisition step S100. If it is determined that the production efficiency PE is below the threshold value Tp, the operation support method of the present example moves to a warning step 5104.

In the production efficiency PE acquisition step S100, the production efficiency acquisition unit 10 may acquire the production efficiency PE in real time. In the first determination step S102, the determination unit 12 may determine in real time whether the production efficiency PE is below the threshold value Tp.

The operation support method of the present example includes the warning step S104. In the warning step S104, the operation support apparatus 100 warns that the production efficiency PE is below the threshold value Tp. In the warning step S104, the control unit 20 may cause the display unit 62 to display a warning that the production efficiency CE is below the threshold value Tp.

Data related to the first factor F1 is defined as data Da1. The data Da1 related to the first factor F1 refers to data related to determination of the first factor F1. The data related to the determination of the first factor F1 refers to data of pH related to determination as to "Is pH of salt water within predetermined range?" in the example of the first factor F1 in No. 4 shown in Fig. 7.

The operation support method of the present example includes a data Da1 acquisition step S106. The data Da1 related to the first factor F1 may be automatically acquired.

The operation support method of the present example includes a first judgement step S108. In the first judgement step S108, the determination unit 12 judges whether the data Da1 is sufficient. Whether the data Da1 is sufficient means whether the data Da1 related to all the first factors F1 shown in Fig. 7 has been acquired. If it is judged that the data Da1 is sufficient, the operation support method moves to the first identification step 5112. If it is judged that the data Da1 is not sufficient, the operation support method moves to a data input step 5110. In the data input step S110, the input unit 60 may manually input the data Da1 which has not been acquired in the data Da1 acquisition step S106.

In the first identification step S112, the identification unit 14 identifies the first factor F1 for which the production efficiency PE has fallen below the threshold value Tp. In the first identification step S112, the identification unit 14 may identify, among the plurality of first factors F1 shown in Fig. 7, the one or more first factors F1 for which the production efficiency PE has fallen below the threshold value Tp. The one or more first factors F1 may be displayed in the display unit 62. In the first identification step S112, the identification unit 14 may identify the first factor F1 in in real time.

In the first identification step S112, the identification unit 14 may identify the first impurity Im1 corresponding to the first factor F1, and identify the first countermeasure Cm1 which corresponds to the first factor F1 and is for suppressing a decrease in the production efficiency PE of the electrolysis tank 90 and recovering the production efficiency PE.

The operation support method of the present example includes a first instruction step 5114. In the first instruction step S114, the instruction unit 19 may give an instruction to take the first countermeasure Cm1 for suppressing the decrease in the production efficiency PE and recovering the production efficiency PE, by eliminating the one or more first factors F1 for which the production efficiency PE has fallen below the threshold value Tp. The control unit 20 may instruct a user of the operation support apparatus 100 to take the first countermeasure Cm1, by causing the display unit 62 to display the first countermeasure Cm1.

The production efficiency PE may be the current efficiency CE of the electrolysis tank 90. If the production efficiency PE is the current efficiency CE, the threshold value Tp of the production efficiency PE may be a threshold value of the current efficiency CE. The threshold value is defined as the threshold value Te. If the production efficiency PE is the current efficiency CE, in the first determination step S102, the determination unit 12 may determine whether the current efficiency CE is below the threshold value Te.

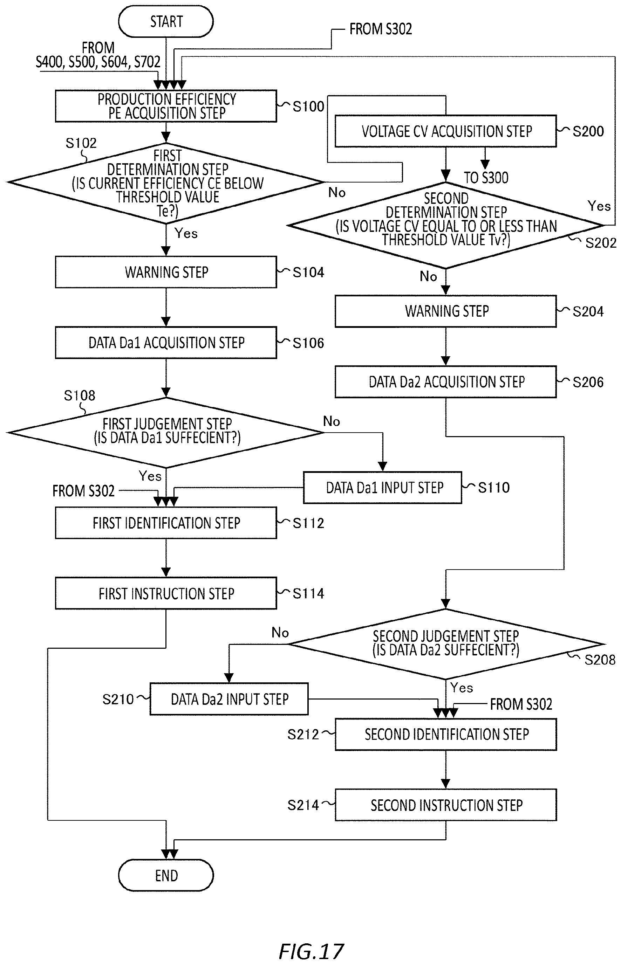

Fig. 17 is an example of a second flowchart including an operation support method according to one embodiment of the present invention. The operation support method according to one embodiment of the present invention supports operation of the electrolysis tank 90 (see Fig. 2). The operation support method according to one embodiment of the present invention includes the production efficiency PE acquisition step S100, the first determination step S102, the first identification step S112, a voltage CV acquisition step 5200, a second determination step 5202, and a second identification step S212.

The production efficiency PE acquisition step S100, the first determination step S102, the warning step S104, the data Da1 acquisition step S106, the first judgement step S108, the first identification step S112, and the first instruction step 5114 in Fig. 17 are the same as those in Fig. 16. In the operation support method of the present example, in the production efficiency PE acquisition step, the production efficiency acquisition unit 10 acquires the current efficiency CE of the electrolysis tank 90. The operation support method of the present example is different from the operation support method shown in Fig. 16 in that it proceeds to the second determination step 5202 if it is determined by the determination unit 12 in the first determination step S102 that the current efficiency CE is equal to or greater than the threshold value Te.

In the voltage CV acquisition step 5200, the voltage acquisition unit 16 acquires the voltage CV. After the voltage CV acquisition step 5200, the operation support method proceeds to the second determination step 5202 or an electric power consumption rate calculation step S300. The electric power consumption rate calculation step S300 will be described later.

In the second determination step S202, the determination unit 12 determines whether the voltage CV of the electrolysis tank 90 acquired in the voltage acquisition step 5200 is above the threshold value Tv. If it is determined that the voltage CV is equal to or less than the threshold value Tv, the operation support method returns to the production efficiency PE acquisition step S100. If it is determined that the voltage CV is above the threshold value Tv, the operation support method of the present example moves to a warning step S204.

In the voltage CV acquisition step 5200, the voltage acquisition unit 16 may acquire the voltage CV in real time. In the second determination step S202, the determination unit 12 may determine in real time whether the voltage CV is above the threshold value Tv.

The operation support method of the present example includes the warning step 5204. In the warning step S204, the operation support apparatus 100 warns that the voltage CV is above the threshold value Tv. In the warning step S204, the control unit 20 may cause the display unit 62 to display a warning that the voltage CV is above the threshold value Tv.

Data related to the second factor F2 is defined as data Da2. The data Da2 related to the second factor F2 refers to data related to determination of the second factor F2. The data related to the determination of the second factor F2 refers to data on an amount of iron related to determination as to "Is iron in raw salt 5ppm or less?" in the example of the second factor F2 in No. 9 shown in Fig. 10.

The operation support method of the present example includes a data Da2 acquisition step 5206. The data Da2 related to the second factor F2 may be automatically acquired.

The operation support method of the present example includes a second judgement step S208. In the second judgement step S208, the determination unit 12 judges whether the data Da2 is sufficient. Whether the data Da2 is sufficient means whether the data Da2 related to all the second factors F2 shown in Fig. 9 and Fig. 10 has been acquired. If it is judged that the data Da2 is sufficient, the operation support method moves to the second identification step S212. If it is judged that the data Da2 is not sufficient, the operation support method moves to a data input step 5210. In the data input step S210, the input unit 60 may manually input the data Da2 which has not been acquired in the data Da2 acquisition step S206.

In the second identification step S212, the identification unit 14 identifies the second factor F2 for which the voltage CV has gone above the threshold value Tv. In the second identification step S212, the identification unit 14 may identify, among the plurality of second factors F2 shown in Fig. 9 and Fig. 10, the one or more second factors F2 for which the voltage CV has gone above the threshold value Tv. The one or more second factors F2 may be displayed in the display unit 62. In the second identification step S212, the identification unit 14 may identify the second factor F2 in real time.

In the second identification step S212, the identification unit 14 may identify the second impurity Im2 corresponding to the second factor F1, and identify the second countermeasure Cm2 which corresponds to the second factor F2 and is for suppressing an increase in the voltage CV and recovering the voltage CV.

The operation support method of the present example includes a second instruction step S214. In the second instruction step S214, the instruction unit 19 may give an instruction to take the second countermeasure Cm2 for suppressing the increase in the voltage CV and recovering the voltage CV, by eliminating the one or more second factors F2 for which the voltage CV has gone above the threshold value Tv. The control unit 20 may instruct a user of the operation support apparatus 100 to take the second countermeasure Cm2, by causing the display unit 62 to display the second countermeasure Cm2.

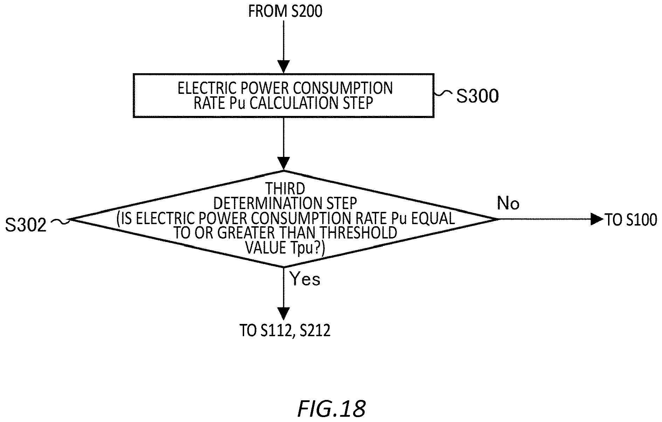

Fig. 18 is another example of a second flowchart including an operation support method according to one embodiment of the present invention. The operation support method of the present example further includes the electric power consumption rate calculation step S300 and a third determination step S302.

In the electric power consumption rate calculation step S300, the determination unit 12 calculates the electric power consumption rate Pu based on at least one of the current efficiency CE or the voltage CV. The production efficiency PE may be the current efficiency CE acquired in the production efficiency CE acquisition step 5100 or the electric power consumption rate Pu calculated in the electric power consumption rate calculation step 5300.

In the third determination step S302, the determination unit 12 determines whether the electric power consumption rate Pu is equal to or greater than the threshold value Tpu. If it is determined in the third determination step S302 that the electric power consumption rate Pu is equal to or greater than the threshold value Tpu, the operation support method returns to at least one of the first identification step S112 or the second identification step S212. If it is determined in the third determination step S302 that the electric power consumption rate Pu is equal to or greater than the threshold value Tpu, the operation support method returns to the production efficiency PE acquisition step 5100.

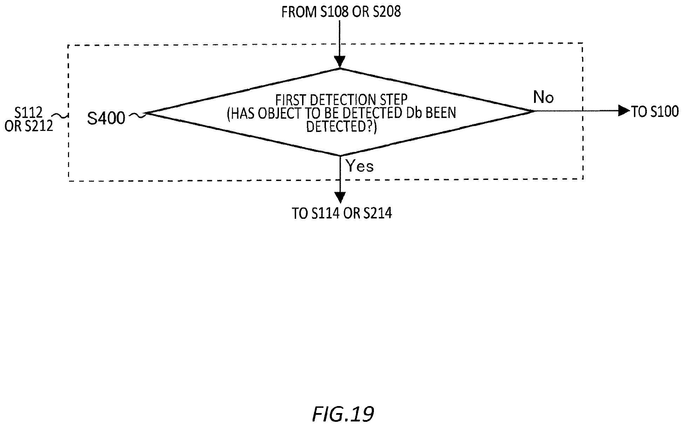

Fig. 19 shows an example of details of the first identification step S112 or the second identification step S212 shown in Fig. 17. In the present example, the first identification step S112 or the second identification step S212 has a first detection step 5400. In the first detection step 5400, the detection unit 99 (see Fig. 3) detects the object to be detected Db. If the object to be detected Db is detected, the operation support method proceeds to the first instruction step S114 after the first identification step S112, and proceeds to the second instruction step S214 after the second identification step S212. If the object to be detected Db is not detected, the operation support method returns to the production efficiency PE acquisition step 5100 after the first identification step S112, and returns to the voltage CV acquisition step 5200 after the second identification step S212.

In the present example, in the first instruction step S114 or the second instruction step S214, the instruction unit 19 (see Fig. 8) instructs the chemical agent charging unit 160 to charge the chemical agent 111 into the reaction tank 115.

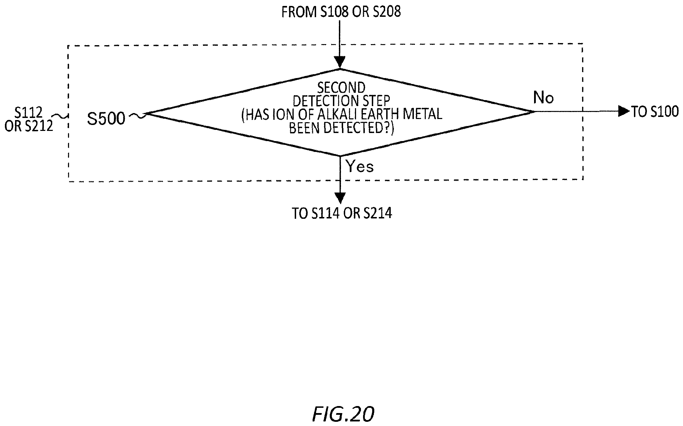

Fig. 20 shows another example of details of the first identification step S112 or the second identification step S212 shown in Fig. 17. In the present example, the first identification step S112 or the second identification step S212 has a second detection step S500. In the second detection step S500, the impurity sensor 117 (see Fig. 1) detects an ion of alkali earth metal. If the ion of alkali earth metal is detected, the operation support method proceeds to the first instruction step S114 after the first identification step S112, and proceeds to the second instruction step S214 after the second identification step S212. If the ion of alkali earth metal is not detected, the operation support method returns to the production efficiency PE acquisition step 5100 after the first identification step S112, and returns to the voltage CV acquisition step 5200 after the second identification step S212.

In the present example, in the first instruction step S114 or the second instruction step S214, the instruction unit 19 (see Fig. 8) instructs the pure water charging unit 162 to charge the pure water 163 into the resin tower 116. In the first instruction step S114 or the second instruction step S214, the instruction unit 19 (see Fig. 8) may charge the pure water into the resin tower 116 such that the pure water flows in a direction opposite to a direction in which the liquid 70 flows through the pure water charging unit 162.

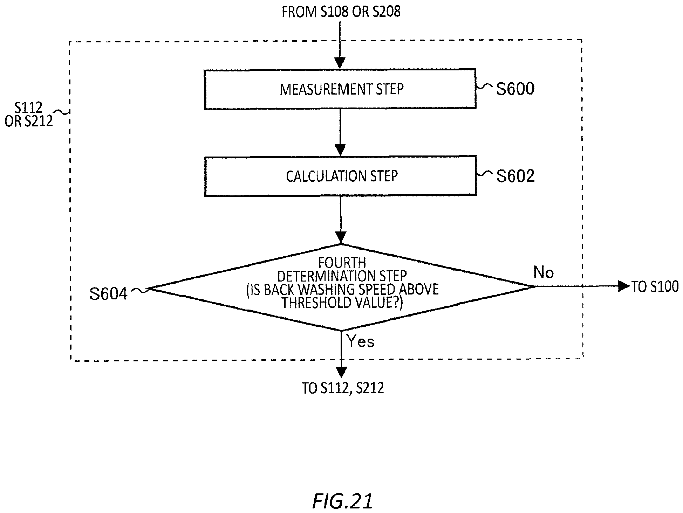

Fig. 21 shows another example of details of the first identification step S112 or the second identification step S212 shown in Fig. 17. In the present example, the first identification step S112 or the second identification step S212 has a measurement step 5600, a calculation step S602, and a fourth determination step S604.

In the measurement step 5600, the flow rate sensor 119 (see Fig. 1) measures a flow rate of the pure water 163. In the calculation step S602, the determination unit 12 (see Fig. 8) calculates a back washing speed of an ion exchange resin based on the flow rate of the pure water 163 measured by the flow rate sensor 119. In the fourth determination step S604, the determination unit 12 determines whether the back washing speed of the ion exchange resin 118 is above a predetermined back washing speed threshold value.

In the fourth determination step S604, if it is determined that the back washing speed is above the predetermined back washing speed threshold value, the operation support method proceeds to the first instruction step S114 after the first identification step S112, and proceeds to the second instruction step S214 after the second identification step S212. If it is determined that the back washing speed is equal to or less than the predetermined back washing speed threshold value, the operation support method returns to the production efficiency PE acquisition step 5100 after the first identification step S112, and returns to the voltage CV acquisition step 5200 after the second identification step S212.

In the present example, in the first instruction step S114 or the second instruction step S214, the instruction unit 19 (see Fig. 8) instructs the pure water charging unit 162 to charge the pure water 163.

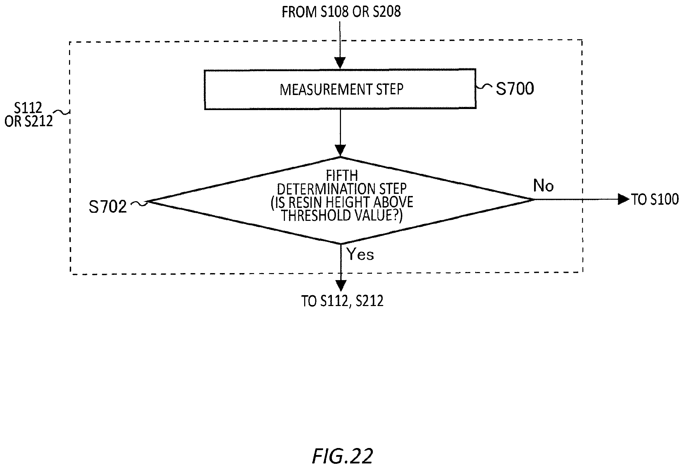

Fig. 22 shows another example of details of the first identification step S112 or the second identification step S212 shown in Fig. 17. In the present example, the first identification step S112 or the second identification step S212 has a measurement step 5700 and a fifth determination step S702.

In the measurement step 5700, the image sensor 120 (see Fig. 1) measures a resin height of the resin tower 116. In the fifth determination step S702, the determination unit 12 (see Fig. 8) determines whether the resin height measured by the image sensor 120 is above a predetermined resin height threshold value.

If it is determined in the fifth determination step S702 that the resin height is above the resin height threshold value, the operation support method proceeds to the first instruction step S114 after the first identification step S112, and proceeds to the second instruction step S214 after the second identification step S212. If it is determined that the resin height is equal to or less than the resin height threshold value, the operation support method returns to the production efficiency PE acquisition step 5100 after the first identification step S112, and returns to the voltage CV acquisition step 5200 after the second identification step S212.

In the present example, in the first instruction step S114 or the second instruction step S214, the instruction unit 19 (see Fig. 8) instructs the chemical solution charging unit 164 to charge the chemical solution 165 into the resin tower 116.

Various embodiments of the present invention may be described with reference to flowcharts and block diagrams. According to the various embodiments of the present invention, a block may represent (1) a stage of a process where operations are executed or (2) a section of an apparatus having a role for executing operations.

Certain stages may be executed by a dedicated circuit, a programmable circuit, or a processor. Certain sections may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit and an analog hardware circuit. The dedicated circuit may include at least one of an integrated circuit (IC) and a discrete circuit. The programmable circuit may a hardware circuit including include logical AND, logical OR, logical XOR, logical NAND, logical NOR, and other logical operations. The programmable circuit may include a reconfigurable hardware circuit including a flip-flop, a register, a memory element such as a field programmable gate array (FPGA) and a programmable logic array (PLA), and the like.

Computer readable medium may include any tangible device that can store instructions for execution by a suitable device. Since the computer readable medium includes the tangible device, the computer readable medium having the instruction stored on the device constitutes a product including an instruction that may be executed in order to create means to execute an operation designated by a flowchart or a block diagram.

The computer readable medium may be, for example, an electronic storage medium, a magnetic storage medium, an optical storage medium, an electromagnetic storage medium, a semiconductor storage medium, or the like. More specifically, for example, the computer readable medium may be a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, and an object code. The source code and the object code may be described in any combination of one or more programming languages including an object oriented programming language and a procedural programming language in related art. The object oriented programming language may be, for example, Smalltalk (registered trademark), JAVA (registered trademark), C++, or the like. The procedural programming language may be, for example, a "C" programming language.

The computer readable instruction may be provided to a general purpose computer, a special purpose computer, or a processor or a programmable circuit of another programmable data processing apparatus locally or via a local area network (LAN) or a wide area network (WAN) such as the Internet. The general purpose computer, the special purpose computer, or the processor or the programmable circuit of another programmable data processing apparatus may execute the computer readable instruction in order to create means for executing operations designated in the flowcharts shown in Fig. 16 to Fig. 22 or the block diagrams shown in Fig. 5, Fig. 8, Fig. 11, Fig. 13, and Fig. 15. The processor may be, for example, a computer processor, a processing unit, a microprocessor, a digital signal processor, a controller, a microcontroller, or the like.

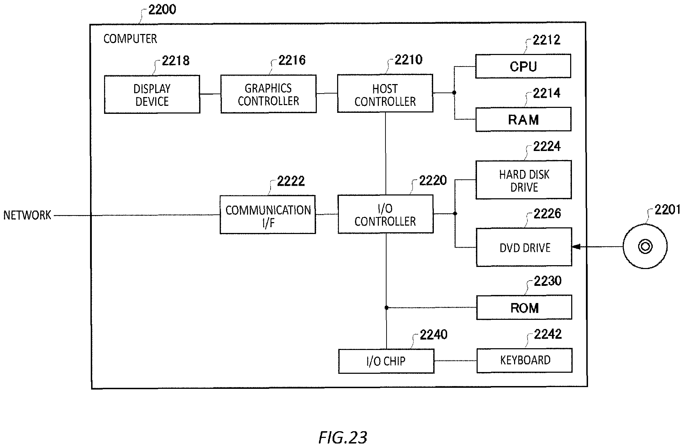

Fig. 23 shows an example of a computer 2200 in which the operation support apparatus 100 according to an embodiment of the present invention may be entirely or partially embodied. A program installed in the computer 2200 can cause the computer 2200 to function as operations associated with the operation support apparatus 100 according to an embodiment of the present invention or one or more sections of the operation support apparatus 100 or to execute the operations or the one or more sections, or can cause the computer 2200 to execute each of stages (see Fig. 16 to Fig. 22) according to the operation support method of the present invention. The program may be executed by the CPU 2212 in order to cause the computer 2200 to execute certain operations associated with some or all of the blocks in the flowcharts (Fig. 16 to Fig. 22) and the block diagrams (Fig. 5, Fig. 8, Fig. 11, Fig. 13, and Fig. 15) described in the present specification.

The computer 2200 according to the present embodiment includes a CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input/output unit such as a communication interface 2222, a hard disk drive 2224, a DVD-ROM drive 2226, and an IC card drive. The communication interface 2222, the hard disk drive 2224, the DVD-ROM drive 2226, and the IC card drive, and the like are connected to the host controller 2210 via an input/output controller 2220. The computer further includes legacy input/output units such as a ROM 2230 and a keyboard 2242. The ROM 2230, the keyboard 2242, and the like are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in the RAM 2214 itself to cause the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the read programs or data to the hard disk drive 2224 via the RAM 2214. The IC card drive reads programs and data from an IC card, or writes programs and data to the IC card.

The ROM 2230 stores a boot program or the like executed by the computer 2200 at the time of activation, or a program depending on the hardware of the computer 2200. The input/output chip 2240 may connect various input/output unit via a parallel port, a serial port, a keyboard port, a mouse port, or the like to the input/output controller 2220.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and the above-described various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like. The CPU 2212 may execute various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may execute various types of processing on the data read from the RAM 2214, which includes various types of operations, information processing, condition judging, conditional branch, unconditional branch, search or replace of information, or the like, as described throughout the present disclosure and designated by an instruction sequence of programs. The CPU 2212 may write the result back to the RAM 2214.

The CPU 2212 may search for information in a file, a database, or the like in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, read the attribute value of the second attribute stored in the entry, and read a second attribute value to acquire the attribute value of the second attribute associated with the first attribute satisfying the predetermined condition.

The program or software modules described above may be stored in the computer readable media on the computer 2200 or of the computer 2200. A recording medium such as a hard disk or a RAM provided in a server system connected to a dedicated communication network or the Internet can be used as the computer readable media. The program may be provided to the computer 2200 by the recording medium.

While the present invention has been described by way of the embodiments, the technical scope of the present invention is not limited to the scope described in the above-described embodiments. It is apparent to persons skilled in the art that various alterations or improvements can be made to the above-described embodiments. It is apparent from the description of the claims that embodiments added with such alterations or improvements can also be included in the technical scope of the present invention.

It should be noted that the operations, procedures, steps, stages, and the like of each process performed by an apparatus, system, program, and method shown in the claims, embodiments, or diagrams can be realized in any order as long as the order is not indicated by "prior to," "before," or the like and as long as the output from a previous process is not used in a later process. Even if the operation flow is described using phrases such as "first" or "next" in the claims, embodiments, or diagrams for convenience, it does not necessarily mean that the process must be performed in this order.

EXPLANATION OF REFERENCES

10: production efficiency acquisition unit, 11: pH acquisition unit, 12: determination unit, 13: production efficiency calculation unit, 14: identification unit, 15: concentration calculation unit, 16: voltage acquisition unit, 18: storage unit, 19: instruction unit, 20: control unit, 60: input unit, 62: display unit, 70: liquid, 71: cation, 72: liquid, 73: liquid, 74: liquid, 75: liquid, 76: liquid, 77: gas, 78: gas, 79: anode chamber, 80: anode, 82: cathode, 84: ion exchange membrane, 86: anionic group, 90: electrolysis tank, 91: electrolysis cell, 92: introduction tube, 93: introduction tube, 94: lead-out tube, 95: lead-out tube, 98: cathode chamber, 99: detection unit, 100: operation support apparatus, 110: raw salt, 111: chemical agent, 112: sedimentation and separation tank, 113: raw salt dissolution layer, 114: filter, 115: reaction tank, 116: resin tower, 117: impurity sensor, 118: ion exchange resin, 119: flow rate sensor, 160: chemical agent charging unit, 162: pure water charging unit, 163: pure water, 200: electrolytic apparatus, 300: operation support system, 2200: computer, 2201: DVD-ROM, 2210: host controller, 2212: CPU, 2214: RAM, 2216: graphics controller, 2218: display device, 2220: input/output controller, 2222: communication interface, 2224: hard disk drive, 2226: DVD-ROM drive, 2230: ROM, 2240: input/output chip, 2242: keyboard.

**Claims**

1. An operation support apparatus comprising:

   a production efficiency acquisition unit which acquires production efficiency of an electrolysis tank;
   a determination unit which determines whether the production efficiency of the electrolysis tank acquired by the production efficiency acquisition unit is below a predetermined production efficiency threshold value; and
   an identification unit which identifies, if it is determined by the determination unit that the production efficiency of the electrolysis tank is below the production efficiency threshold value, a first factor for which the production efficiency of the electrolysis tank has fallen below the production efficiency threshold value.

2. The operation support apparatus according to claim 1, wherein

   the production efficiency acquisition unit acquires the production efficiency of the electrolysis tank in real time,
   the determination unit determines in real time whether the production efficiency of the electrolysis tank is below the production efficiency threshold value, and
   the identification unit identifies the first factor in real time.

3. The operation support apparatus according to claim 1 or 2, wherein
   the identification unit identifies a first impurity which is in the electrolysis tank and corresponds to the first factor, and identifies a first countermeasure which corresponds to the first factor and is for suppressing a decrease in the production efficiency of the electrolysis tank and recovering the production efficiency.

4. The operation support apparatus according to claim 3, wherein
   the identification unit identifies the first factor, the first impurity, and the first countermeasure in real time.

5. The operation support apparatus according to any one of claims 1 to 4, wherein

   the production efficiency is current efficiency, and
   the determination unit determines whether the current efficiency is below a predetermined current efficiency threshold value.

6. The operation support apparatus according to claim 5, further comprising a voltage acquisition unit which acquires voltage to be supplied to the electrolysis tank, wherein

   when determining that the current efficiency is equal to or greater than the current efficiency threshold value, the determination unit further determines whether the voltage acquired by the voltage acquisition unit is above a predetermined voltage threshold value, and
   if it is determined by the determination unit that the voltage is above the voltage threshold value, the identification unit identifies a second factor for which the voltage has gone above the voltage threshold value.

7. The operation support apparatus according to claim 6, wherein

   the determination unit calculates an electric power consumption rate of the electrolysis tank based on at least one of the current efficiency or the voltage, and

the production efficiency is the current efficiency, or the electric power consumption rate calculated by the determination unit.

8. The operation support apparatus according to claim 7, wherein

if the production efficiency is the electric power consumption rate, the determination unit determines whether the electric power consumption rate is equal to or greater than a predetermined electric power consumption rate threshold value, and
if it is determined by the determination unit that the electric power consumption rate of the electrolysis tank is equal to or greater than an electric power consumption rate threshold value, the identification unit identifies the first factor or the second factor.

9. The operation support apparatus according to any one of claims 6 to 8, wherein

the voltage acquisition unit acquires in real time the voltage to be supplied to the electrolysis tank,
the determination unit determines in real time whether the voltage to be supplied to the electrolysis tank is above the voltage threshold value, and
the identification unit identifies the second factor in real time.

10. The operation support apparatus according to any one of claims 6 to 9, wherein
the identification unit identifies a second impurity which is in the electrolysis tank and corresponds to the second factor, and identifies a second countermeasure which corresponds to the second factor and is for suppressing an increase in the voltage and recovering the voltage.

11. The operation support apparatus according to claim 10, wherein
the identification unit identifies the second factor, the second impurity, and the second countermeasure in real time.

12. The operation support apparatus according to claim 3 or 4, further comprising a storage unit which stores the first factor, the first impurity corresponding to the first factor, and the first countermeasure corresponding to the first factor.

13. The operation support apparatus according to claim 10 or 11, further comprising a storage unit which stores the second factor, the second impurity corresponding to the second factor, and the second countermeasure corresponding to the second factor.

14. The operation support apparatus according to any one of claims 6 to 11, wherein
at least one of the production efficiency threshold value or the voltage threshold value changes as working time of the electrolysis tank elapses.

15. The operation support apparatus according to any one of claims 1 to 14, further comprising a pH acquisition unit and a production efficiency calculation unit which calculates the production efficiency of the electrolysis tank, wherein

the electrolysis tank includes an ion exchange membrane, and an anode chamber and a cathode chamber which are separated by the ion exchange membrane,
an aqueous solution of alkali metal chloride is introduced into the anode chamber,
the pH acquisition unit acquires pH of the aqueous solution of alkali metal chloride introduced into the anode chamber,
the production efficiency calculation unit calculates the production efficiency of the electrolysis tank based on the pH of the aqueous solution of alkali metal chloride acquired by the pH acquisition unit, and
the production efficiency acquisition unit acquires the production efficiency of the electrolysis tank calculated by the production efficiency calculation unit.

16. The operation support apparatus according to claim 15, wherein

the aqueous solution of alkali metal chloride is a sodium chloride aqueous solution or a potassium chloride aqueous solution,
if the sodium chloride aqueous solution is introduced into the anode chamber, a sodium hydroxide aqueous solution is introduced into the cathode chamber, and if the potassium chloride aqueous solution is introduced into the anode chamber, a potassium hydroxide aqueous solution is introduced into the cathode chamber,

the operation support apparatus further comprises a concentration calculation unit which calculates, based on the pH acquired by the pH acquisition unit, an oxygen concentration, a hypochlorous acid concentration, and a sodium chlorate concentration in the anode chamber, as well as a hydrogen ion concentration and a hydroxide ion concentration of the sodium chloride aqueous solution or the potassium chloride aqueous solution introduced into the anode chamber,

the production efficiency calculation unit calculates the production efficiency of the electrolysis tank based on the oxygen concentration, the hypochlorous acid concentration, and the sodium chlorate concentration in the anode chamber as well as the hydroxide ion concentration of the sodium chloride aqueous solution or the potassium chloride aqueous solution introduced into the anode chamber and the hydrogen ion concentration of the sodium chloride aqueous solution or the potassium chloride aqueous solution led out of the anode chamber, which are calculated by the concentration calculation unit.

17. The operation support apparatus according to claim 16, wherein

the concentration calculation unit calculates a first relationship between pH of the sodium chloride aqueous solution or the potassium chloride aqueous solution and the oxygen concentration, calculates a second relationship between the pH of the sodium chloride aqueous solution or the potassium chloride aqueous solution and the hypochlorous acid concentration, calculates a third relationship between the pH of the sodium chloride aqueous solution or the potassium chloride aqueous solution and the sodium chlorate concentration, calculates a fourth relationship between the pH of the sodium chloride aqueous solution or the potassium chloride aqueous solution and the hydrogen ion concentration, and calculates a fifth relationship between the pH of the sodium chloride aqueous solution or the potassium chloride aqueous solution and the hydroxide ion concentration, and

the concentration calculation unit calculates the oxygen concentration based on the pH acquired by the pH acquisition unit and on the first relationship, calculates the hypochlorous acid concentration based on the pH acquired by the pH acquisition unit and on the second relationship, calculates the sodium chlorate concentration based on the pH acquired by the pH acquisition unit and on the third relationship, calculates the hydrogen ion concentration based on the pH acquired by the pH acquisition unit and on the fourth relationship, and calculates the hydroxide ion concentration based on the pH acquired by the pH acquisition unit and on the fifth relationship.

18. An operation support system comprising the operation support apparatus according to any one of claims 1 to 17 and an electrolysis tank.

19. An operation support method comprising:

acquiring, by a production efficiency acquisition unit, production efficiency of an electrolysis tank;
first determining, by a determination unit, whether the production efficiency of the electrolysis tank acquired in the acquiring the production efficiency is below a predetermined production efficiency threshold value; and
if it is determined in the first determining that the production efficiency of the electrolysis tank is below the production efficiency threshold value, first identifying, by an identification unit, a first factor for which the production efficiency of the electrolysis tank has fallen below the production efficiency threshold value.

20. The operation support method according to claim 19, wherein

the acquiring the production efficiency is acquiring, by the production efficiency acquisition unit, the production efficiency of the electrolysis tank in real time,
the first determining is determining in real time, by the determination unit, whether the production efficiency of the electrolysis tank is below the production efficiency threshold value, and
the first identifying is identifying, by the identification unit, the first factor in real time.

21. The operation support method according to claim 19 or 20, wherein

the production efficiency is current efficiency, and
the first determining is determining, by the determination unit, whether the current efficiency is below a predetermined current efficiency threshold value.

22. The operation support method according to claim 21, further comprising:

acquiring, by a voltage acquisition unit, voltage to be supplied to the electrolysis tank;

if it is determined in the first determining that the current efficiency of the electrolysis tank is equal to or greater than a predetermined current efficiency threshold value, second determining, by the determination unit, whether the voltage acquired in the acquiring the voltage is above a predetermined voltage threshold value; and

if it is determined in the second determining that the voltage is above the voltage threshold value, second identifying, by the identification unit, a second factor for which the voltage has gone above the voltage threshold value.

23. The operation support method according to claim 22, further comprising calculating, by the determination unit, an electric power consumption rate of the electrolysis tank based on at least one of the current efficiency or the voltage, wherein

the production efficiency is the current efficiency, or the electric power consumption rate calculated in the calculating the electric power consumption rate.

24. The operation support method according to claim 23, further comprising, third determining, by the determination unit, whether the electric power consumption rate is equal to or greater than a predetermined electric power consumption rate threshold value, if the production efficiency is the electric power consumption rate, wherein

if it is determined in the third determining that the electric power consumption rate of the electrolysis tank is equal to or greater than the electric power consumption rate threshold value, the first identifying is identifying, by the identification unit, the first factor, and the second identifying is identifying, by the identification unit, the second factor.

25. The operation support method according to claim 22 or 24, wherein

the acquiring the voltage is acquiring in real time, by the voltage acquisition unit, the voltage to be supplied to the electrolysis tank,

the second determining is determining in real time, by the determination unit, whether the voltage is above the voltage threshold value, and

the second identifying is identifying, by the identification unit, the second factor in real time.

26. The operation support method according to any one of claims 22 to 25, wherein

the first identifying is identifying, by the identification unit, a first impurity which is in the electrolysis tank and corresponds to the first factor, and identifying, by the identification unit, a first countermeasure which corresponds to the first factor and is for suppressing a decrease in the production efficiency of the electrolysis tank and recovering the production efficiency,

the second identifying is identifying, by the identification unit, a second impurity which is in the electrolysis tank and corresponds to the second factor, and identifying, by the identification unit, a second countermeasure which corresponds to the second factor and is for suppressing an increase in the voltage and recovering the voltage, and

the operation support method further comprises first instructing, by an instruction unit, the electrolysis tank to take the first countermeasure, or second instructing, by the instruction unit, the electrolysis tank to take the second countermeasure.

27. An operation support program that causes a computer to execute the operation support method according to any one of claims 19 to 26.

FIG.1

200

FIG.2

FIG.3

FIG.4

INPUT UNIT ~60

DISPLAY UNIT ~62

12

DETERMINATION UNIT

20

10 ~ PRODUCTION EFFICIENCY ACQUISITION UNIT ⟷ CONTROL UNIT ⟷ IDENTIFICATION UNIT ~14

FROM ELECTROLYSIS TANK 90

INSTRUCTION UNIT ~19

TO CHEMICAL AGENT CHARGING UNIT 160
TO CHEMICAL SOLUTION CHARGING UNIT 164
TO PURE WATER CHARGING UNIT 162

100

FIG.5

| | DETERM-INATION | FIRST COUNTERMEASURE Cm1 | DETERM-INATION | SECOND COUNTERMEASURE Cm2 |
|---|---|---|---|---|
| IS PRODUCTION EFFICIENCY PE EQUAL TO OR GREATER THAN THRESHOLD VALUE Tp? | Yes | IS VOLTAGE CV EQUAL TO OR LESS THAN THRESHOLD VALUE Tv? | Yes | REFER TO FACTOR FOR INCREASE IN VOLTAGE CV. |
| | | | No | CONTINUE TO MONITOR PRODUCTION EFFICIENCY PE. |
| | No | ANOMALY HAS BEEN DETECTED. COUNTERMEASURE WILL BE ANNOUNCED. | | |
| | | PRODUCTION EFFICIENCY PE HAS DECREASED. IT IS RECOMMENDED TO DECREASE CURRENT, STOP ELECTROLYSIS TANK TO WORK, AND WASH ELECTROLYSIS TANK WITH WATER. | | |
| | | CHECK IF THERE IS ANY ERROR IN INSTRUMENT (pH METER, HYDROCHLORIC ACID FLOW METER) | | |
| | | INVESTIGATION ON ANOMALY WILL BE STARTED. | | |

62

FIG.6

| No. | FIRST IMPURITY Im1 | FIRST FACTOR F1 | DETERMI-NATION | FIRST COUNTERMEASURE Cm1 |
|---|---|---|---|---|
| 1 | I | IS THERE RAW SALT ANALYSIS VALUE? | Yes | ANALYZE RAW SALT. |
| 2 | | IS IODINE IN RAW SALT BELOW PREDETERMINED VALUE? | Yes | HIGH IN IODINE CONTENT. WATCH OUT FOR QUALITY OF SALT WATER. CONSIDER USING DIFFERENT SALT. |
| 3 | Ca | IS $CO_3$ CONCENTRATION OF PRIMARY SALT WATER EQUAL TO OR GREATER THAN PREDETERMINED VALUE? | Yes | ADJUST FLOW RATE OF SODA ASH. |
| 4 | Mg, Si, Al | IS pH OF SALT WATER WITHIN PREDETERMINED RANGE? | No | ADJUST pH OF SALT WATER WITHIN PREDETERMINED RANGE. |
| 5 | Ba | IS Ba CONCENTRATION BELOW PREDETERMINED VALUE? | Yes | ADJUST ADDITIVE AMOUNT OF Ba. |
| 6 | Al, Si | IS CONCENTRATION OF SLUDGE AT CLARIFIER INLET EQUAL TO OR GREATER THAN PREDETERMINED VALUE? | Yes | INCREASE FLOW RATE OF RETURNED SLUDGE. |
| 7 | SS | IS TURBIDITY AT FILTER OUTLET BELOW PREDETERMINED VALUE? | Yes | CHECK FOR FILTER LEAKS. |
| 8 | Ca, Sr, Ba, Mg | IS TEMPERATURE OF SALT WATER EQUAL TO OR GREATER THAN PREDETERMINED VALUE? | Yes | INCREASE TEMPERATURE. |
| 9 | | IS FLOW VOLUME OF SALT WATER/RESIN AMOUNT BELOW PREDETERMINED VALUE? | Yes | RECONSIDER REGENERATION FREQUENCY OF ION EXCHANGE MEMBRANE. |
| 10 | | IS TIME FROM START OF LIQUID FLOW TO RESIN TOWER BELOW PREDETERMINED TIME? | Yes | RECONSIDER REGENERATION FREQUENCY OF ION EXCHANGE MEMBRANE. |
| 11 | | IS FLOW RATE OF SALT WATER/TOWER CROSS-SECTIONAL AREA BELOW PREDETERMINED VALUE? | Yes | FLOW RATE OF SALT WATER HAS INCREASED. |
| 12 | Ca | IS Ca CONCENTRATION BELOW PREDETERMINED VALUE? | Yes | RECONSIDER REGENERATION FREQUENCY OF ION EXCHANGE MEMBRANE. |
| 13 | | | Yes | RECONSIDER RESIN HEIGHT. |
| 14 | | | Yes | INVESTIGATE WHETHER PERFORMANCE OF RESIN HAS DECREASED. |
| 15 | TOC | IS TOC BELOW PREDETERMINED VALUE? | Yes | INVESTIGATE WHETHER RECOVERED SALT WATER HAS BEEN USED. |
| 16 | | IS ADDITIVE AMOUNT OF FLOCCULATION AGENT BELOW PREDETERMINED PERCENTAGE OF FLOW RATE OF NaCl AQUEOUS SOLUTION? | Yes | CONSIDER DECREASING FLOW RATE OF FLOCCULATION AGENT. |
| 17 | $SO_4$ | IS $SO_4$ CONCENTRATION OF SECONDARY SALT WATER EQUAL TO OR LESS THAN PREDETERMINED VALUE? | Yes | ADJUST ADDITIVE AMOUNT OF Ba. |
| 18 | | | Yes | ADJUST PURGE FLOW RATE OF SALT WATER. |
| 19 | | IS PURGE FLOW RATE OF SALT WATER EQUAL TO OR LESS THAN PREDETERMINED VALUE? | Yes | ADJUST PURGE FLOW RATE OF SALT WATER. |

62

*FIG.7*

INPUT UNIT ~60

12

DETERMINATION
UNIT

DISPLAY UNIT ~62

FROM
ELECTROLYSIS
TANK 90

20

10 ~ PRODUCTION
EFFICIENCY
ACQUISITION UNIT

CONTROL UNIT

IDENTIFICATION
UNIT ~14

16 ~ VOLTAGE
ACQUISITION
UNIT

INSTRUCTION
UNIT ~19

TO CHEMICAL AGENT CHARGING UNIT 160
TO CHEMICAL SOLUTION CHARGING UNIT 164
TO PURE WATER CHARGING UNIT 162

100

*FIG.8*

| No. | PROBLEM | SECOND FACTOR F2 | DETERMI-NATION | SECOND COUNTERMEASURE Cm2 |
|---|---|---|---|---|
| 1 | TIGHTNESS OF ION EXCHANGE MEMBRANE | IS FLOW RATE OF SALT WATER LESS THAN PREDETERMINED FLOW RATE? | No | ADJUST FLOW RATE OF SALT WATER. |
| 2 | | IS CONCENTRATION OF SALT WATER WITHIN PREDETERMINED RANGE? | Yes | ADJUST CONCENTRATION OF SALT WATER. |
| 3 | | IS ALKALI CONCENTRATION BELOW PREDETERMINED CONCENTRATION? | Yes | ADJUST FLOW RATE OF PURE WATER. |
| 4 | | IS MASS OF PURE WATER ABOVE PREDETERMINED MASS? | Yes | |
| 5 | ACIDIFICATION OF ION EXCHANGE MEMBRANE | IS CONCENTRATION OF SALT WATER WITHIN PREDETERMINED RANGE? | Yes | ADJUST CONCENTRATION OF SALT WATER. |
| 6 | | IS pH OF FRESH SALT WATER EQUAL TO OR GREATER THAN PREDETERMINED VALUE? | Yes | ADJUST FLOW RATE OF HYDROCHLORIC ACID. |
| 7 | | IS ADDITIVE AMOUNT OF HYDROCHLORIC ACID BELOW DESIGNED VALUE ACCORDING TO CURRENT EFFICIENCY CE? | Yes | |
| 8 | | IS CONCENTRATION OF HYDROCHLORIC ACID EQUAL TO OR LESS THAN DESIGNED VALUE? | Yes | ADJUST CONCENTRATION OF HYDROCHLORIC ACID. |

62

FIG.9

| No. | SECOND IMPURITY Im2 | SECOND FACTOR F2 | DETERMI -NATION | SECOND COUNTERMEASURE Cm2 |
|---|---|---|---|---|
| 9 | | IS IRON IN RAW SALT EQUAL TO OR LESS THAN PREDETERMINED VALUE? | No | CONSIDER DECREASING IRON IN RAW SALT. |
| 10 | Fe | IS IRON IN SALT WATER EQUAL TO OR LESS THAN PREDETERMINED VALUE? | Yes | THIS MAY BE IRON COMING FROM ELECTROLYSIS TANK, SO MAKE IDENTIFICATION. |
| 11 | | IS THERE RAW SALT ANALYSIS VALUE? | Yes | ANALYZE RAW SALT. |
| 12 | I | IS IODINE IN RAW SALT BELOW PREDETERMINED VALUE? | Yes | HIGH IN IODINE CONTENT. WATCH OUT FOR QUALITY OF SALT WATER. CONSIDER USING DIFFERENT SALT. |
| 13 | Ca | IS $CO_3$ CONCENTRATION OF PRIMARY SALT WATER EQUAL TO OR GREATER THAN PREDETERMINED VALUE? | Yes | ADJUST FLOW RATE OF SODA ASH. |
| 14 | Mg, Si, Al | IS pH OF SALT WATER WITHIN PREDETERMINED RANGE? | No | ADJUST pH OF SALT WATER WITHIN PREDETERMINED RANGE. |
| 15 | Ba | IS Ba CONCENTRATION BELOW PREDETERMINED VALUE? | Yes | ADJUST ADDITIVE AMOUNT OF Ba. |
| 16 | Al, Si | IS CONCENTRATION OF SLUDGE AT CLARIFIER INLET EQUAL TO OR GREATER THAN PREDETERMINED VALUE? | Yes | INCREASE FLOW RATE OF RETURNED SLUDGE. |
| 17 | SS | IS TURBIDITY AT FILTER OUTLET BELOW PREDETERMINED VALUE? | Yes | CHECK FOR FILTER LEAKS. |
| 18 | | IS TEMPERATURE OF SALT WATER EQUAL TO OR GREATER THAN PREDETERMINED VALUE? | Yes | INCREASE TEMPERATURE. |
| 19 | Ca, Sr | IS FLOW VOLUME OF SALT WATER/RESIN AMOUNT BELOW PREDETERMINED VALUE? | Yes | RECONSIDER REGENERATION FREQUENCY OF ION EXCHANGE MEMBRANE. |
| 20 | Ba, Mg | IS TIME FROM START OF LIQUID FLOW TO RESIN TOWER BELOW PREDETERMINED TIME? | Yes | RECONSIDER REGENERATION FREQUENCY OF ION EXCHANGE MEMBRANE. |
| 21 | | IS FLOW RATE OF SALT WATER/TOWER CROSS-SECTIONAL AREA BELOW PREDETERMINED VALUE? | Yes | FLOW RATE OF SALT WATER HAS INCREASED. |
| 22 | | | Yes | RECONSIDER REGENERATION FREQUENCY OF ION EXCHANGE MEMBRANE. |
| 23 | Ca | IS Ca CONCENTRATION BELOW PREDETERMINED VALUE? | Yes | RECONSIDER RESIN HEIGHT. |
| 24 | | | Yes | INVESTIGATE WHETHER PERFORMANCE OF RESIN HAS DECREASED. |
| 25 | TOC | IS TOC BELOW PREDETERMINED VALUE? | Yes | INVESTIGATE WHETHER RECOVERED SALT WATER HAS BEEN USED. |
| 26 | | IS ADDITIVE AMOUNT OF FLOCCULATION AGENT BELOW PREDETERMINED PERCENTAGE OF FLOW RATE OF NaCl AQUEOUS SOLUTION? | Yes | CONSIDER DECREASING FLOW RATE OF FLOCCULATION AGENT. |

62

*FIG.10*

INPUT UNIT ~60

DISPLAY UNIT ~62

12

DETERMINATION UNIT

FROM ELECTROLYSIS TANK 90

20

10 ~ PRODUCTION EFFICIENCY ACQUISITION UNIT

CONTROL UNIT

IDENTIFICATION UNIT ~14

16 ~ VOLTAGE ACQUISITION UNIT

INSTRUCTION UNIT ~19

STORAGE UNIT ~18

TO CHEMICAL AGENT CHARGING UNIT 160
TO CHEMICAL SOLUTION CHARGING UNIT 164
TO PURE WATER CHARGING UNIT 162

100

*FIG.11*

SECOND IMPURITY Im2 →

pH=15

FIRST IMPURITY Im1

pH=4

*FIG.12*

INPUT UNIT ~60

DISPLAY UNIT ~62

12
DETERMINATION UNIT

FROM
ELECTROLYSIS
TANK 90

20

10~ PRODUCTION EFFICIENCY ACQUISITION UNIT

CONTROL UNIT

IDENTIFICATION UNIT ~14

16~ VOLTAGE ACQUISITION UNIT

STORAGE UNIT ~18

CONCENTRATION CALCULATION UNIT ~15

11~ pH ACQUISITION UNIT

INSTRUCTION UNIT ~19

13~ PRODUCTION EFFICIENCY CALCULATION UNIT

TO CHEMICAL AGENT CHARGING UNIT 160
TO CHEMICAL SOLUTION CHARGING UNIT 164
TO PURE WATER CHARGING UNIT 162

100

*FIG.13*

$$O_2 \begin{pmatrix} 2H_2O \rightarrow O_2 + 4H^+ + 4e^- \\ H^+ + OH^- \rightarrow H_2O \end{pmatrix}$$

$$HClO \begin{pmatrix} H_2O + Cl_2 \rightarrow HClO + H^+ + Cl^- \\ H^+ + OH^- \rightarrow H_2O \end{pmatrix}$$

$$NaClO_3 \begin{pmatrix} 6NaOH + 3Cl_2 \rightarrow NaClO_3 + 5NaCl + 3H_2O \\ H^+ + OH^- \rightarrow H_2O \end{pmatrix}$$

$$HCl \begin{pmatrix} Na_2CO_3 + 2HCl \rightarrow 2NaCl + H_2O + CO_2 \end{pmatrix}$$

$$NaOH \begin{pmatrix} H^+ + OH^- \rightarrow H_2O \end{pmatrix}$$

$OH^-$

*FIG.14*

FIG.15

```
                    ┌─────────────┐
                    │    START    │
                    └──────┬──────┘
                           │ ◄─────────────────────────┐
                           ▼                            │
        ┌──────────────────────────────────┐           │
        │   PRODUCTION EFFICIENCY           │  ~S100    │
        │   PE ACQUISITION STEP             │           │
        └──────────────────┬───────────────┘           │
                           ▼                    S102    │
              ╱─────────────────────────╲              │
           ╱      FIRST                     ╲   No      │
          │   DETERMINATION STEP              ├─────────┘
           ╲ (IS PRODUCTION EFFICIENCY PE    ╱
              ╲  BELOW THRESHOLD VALUE Tp?) ╱
                ╲───────────┬──────────╱
                         Yes │
                            ▼
        ┌──────────────────────────────────┐
        │          WARNING STEP            │  ~S104
        └──────────────────┬───────────────┘
                           ▼
        ┌──────────────────────────────────┐
        │    DATA Da1 ACQUISITION STEP     │  ~S106
        └──────────────────┬───────────────┘
                           ▼                    S108
              ╱─────────────────────────╲
           ╱   FIRST JUDGEMENT STEP         ╲   No      ┌──────────────────────┐
          │   (IS DATA Da1 SUFFECIENT?)      ├──────────┤  DATA Da1 INPUT STEP │ ~S110
           ╲                               ╱            └──────────┬───────────┘
              ╲───────────┬──────────╱                            │
                      Yes │                                        │
                         ▼ ◄──────────────────────────────────────┘
        ┌──────────────────────────────────┐
        │     FIRST IDENTIFICATION STEP    │  ~S112
        └──────────────────┬───────────────┘
                           ▼
        ┌──────────────────────────────────┐
        │     FIRST INSTRUCTION STEP       │  ~S114
        └──────────────────┬───────────────┘
                           ▼
                    ┌─────────────┐
                    │     END     │
                    └─────────────┘
```

*FIG.16*

*FIG.17*

FROM S200

ELECTRIC POWER CONSUMPTION
RATE Pu CALCULATION STEP       ~ S300

S302 ~ THIRD
DETERMINATION STEP
(IS ELECTRIC POWER CONSUMPTION RATE Pu EQUAL
TO OR GREATER THAN THRESHOLD
VALUE Tpu?)          No        ▶TO S100

Yes

TO S112, S212

*FIG.18*

FROM S108 OR S208

S112
OR S212

S400

FIRST DETECTION STEP
(HAS OBJECT TO BE DETECTED Db BEEN
DETECTED?)

No

TO S100

Yes

TO S114 OR S214

*FIG.19*

FROM S108 OR S208

S112
OR S212 } S500 ~ SECOND
DETECTION STEP
(HAS ION OF ALKALI EARTH METAL
BEEN DETECTED?) No → TO S100

Yes

TO S114 OR S214

*FIG.20*

FROM S108 OR S208

S112
OR S212

MEASUREMENT STEP — S600

CALCULATION STEP — S602

S604 — FOURTH
DETERMINATION STEP
(IS BACK WASHING SPEED ABOVE
THRESHOLD VALUE?) — No → TO S100

Yes

TO S112, S212

*FIG.21*

FROM S108 OR S208

S112
OR S212

MEASUREMENT STEP — S700

S702

FIFTH
DETERMINATION STEP
(IS RESIN HEIGHT ABOVE
THRESHOLD VALUE?)

No → TO S100

Yes

TO S112, S212

*FIG.22*

*FIG.23*

## INTERNATIONAL SEARCH REPORT

| International application No. |
|---|
| **PCT/JP2022/021694** |

**A.     CLASSIFICATION OF SUBJECT MATTER**

*C25B 1/46*(2006.01)i; *C02F 1/461*(2006.01)i; *C25B 9/00*(2021.01)i; *C25B 15/029*(2021.01)i; *C25B 15/031*(2021.01)i; *C25B 15/033*(2021.01)i
FI:     C25B1/46; C02F1/461 A; C25B9/00 Z; C25B15/029; C25B15/031; C25B15/033

According to International Patent Classification (IPC) or to both national classification and IPC

**B.     FIELDS SEARCHED**

Minimum documentation searched (classification system followed by classification symbols)
C25B1/46; C02F1/461; C25B9/00; C25B15/029; C25B15/031; C25B15/033

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | JP 2004-277870 A (FUJI ELECTRIC ADVANCED TECHNOLOGY CO., LTD.) 07 October 2004 (2004-10-07) claims, paragraphs [0020]-[0024] | 1-13, 18-25, 27 |
| Y | claims, paragraphs [0020]-[0024] | 15-18, 26-27 |
| A | | 14 |
| Y | JP 2014-58707 A (ASAHI KASEI CHEMICALS CORP.) 03 April 2014 (2014-04-03) paragraphs [0009]-[0011] | 15-18 |
| A | | 14 |
| Y | JP 2014-70258 A (MORINAGA MILK INDUSTRY CO., LTD.) 21 April 2014 (2014-04-21) paragraph [0091] | 26-27 |
| A | | 14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2022** | **16 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/021694**

| Patent document cited in search report | | | Publication date (day/month/year) | Patent family member(s) | | | Publication date (day/month/year) |
|---|---|---|---|---|---|---|---|
| JP | 2004-277870 | A | 07 October 2004 | (Family: none) | | | |
| JP | 2014-58707 | A | 03 April 2014 | CN | 103668319 | A | |
| JP | 2014-70258 | A | 21 April 2014 | US | 2015/0259223 | A1 | |
| | | | | paragraph [0247] | | | |
| | | | | WO | 2014/050865 | A1 | |
| | | | | EP | 2902532 | A1 | |
| | | | | KR 10-2015-0038613 | | A | |
| | | | | CN | 104662205 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019019408 A